# EUROPÄISCHE PATENTSCHRIFT

(11) **EP 0 499 183 B1**
(45) Veröffentlichungstag und Bekanntmachung des Hinweises auf die Patenterteilung: **29.07.1998**
(21) Anmeldenummer: 92102206.7
(22) Anmeldetag: 10.02.1992
(51) Int. Cl.: F16F 9/46, B60G 17/08

(54) **Vorgesteuertes Dämpfungsventil mit schwingungsdämpfergerechten Kennlinien**
Controlled damping valve with characteristic curves adapted for the use in a shock absorber
Soupape d'amortissement commandée à combes caractéristiques adaptées à l'utilisation pour un amortisseur

(30) Priorität: 11.02.1991 DE 4104110
(43) Veröffentlichungstag der Anmeldung: 19.08.1992
(73) Patentinhaber: Mannesmann Sachs Aktiengesellschaft, 97424 Schweinfurt (DE)
(72) Erfinder: Wössner, Felix, W-8720 Schweinfurt (DE); Grundei, Manfred, W-8721 Niederwerrn (DE)
(74) Vertreter: Weickmann, Heinrich, Dipl.-Ing.

(56) Entgegenhaltungen:
- EP-A- 0 330 634
- EP-A- 0 364 757

## Beschreibung

Die Erfindung betrifft einen Schwingungsdämpfer gemäß den Oberbegriffen der unabhängigen Ansprüche 1, 2 und 4.

Ein derartiger Schwingungsdämpfer ist aus der EP-A-0 364 757 bekannt. Dieser bekannte Schwingungsdämpfer ist derart aufgebaut, daß eine Hydraulikkraft, die von dem in der ersten Teilstrecke herrschenden Druck auf das Hauptstromventilelement ausgeübt wird, stets kleiner ist als eine Hydraulikkraft, die von dem in der Steuerkammer herrschenden Druck auf das Hauptstromventilelement ausgeübt wird.

Aus der EP-A-0 330 634 ist eine Ventilanordnung in einer Stoßdämpfereinrichtung bekannt, bei welcher das Hauptstromventilelement von dem Typ eines Schieberventilelements ist. Eine hochdruckseitige Druckbeaufschlagungsfläche ist bei konstantem Zuflußquerschnitt zur Steuerkammer gleich einer steuerkammerseitigen Druckbeaufschlagungsfläche.

Bei einem aus der DE-PS 3 609 862 bekannten Schwingungsdämpfer ist vorgesehen, daß durch die Drosselstrecke, welche die erste Teilstrecke mit der Steuerkammer verbindet, lediglich die Menge von Dämpfungsfluid hindurchgeführt wird, welche zur Ansteuerung des Ventilabsperrelements notwendig ist. Die Schwingungsdämpfer-Kennlinien werden daher fast ausschließlich von dem druckabhängig wirkenden Ventilabsperrelement bestimmt. In einem Diagramm, in welchem an der Abszisse die Gesamtdurchflußrate durch die Absperrventilbaugruppe aufgetragen ist und an der Ordinate die Druckdifferenz zwischen dem in der ersten Teilstrecke herrschenden größeren Druck und dem in der zweiten Teilstrecke herrschenden kleineren Druck, im folgenden Gesamtdruckdifferenz genannt, aufgetragen ist, ergeben sich Kennlinien, die nach einem steilen und wenig veränderbaren Anstieg bereits bei kleinen Durchflußraten abknicken und dann zu höheren Durchflußraten hin flach ansteigend verlaufen. Mit abnehmendem Steuerkammerabflußquerschnitt verschiebt sich der Knickpunkt zu höherer Gesamtdruckdifferenz. Derartige Kennlinien sind wegen des stark eingeschränkten "Voröffnungsbereiches" nicht schwingungsdämpfergerecht, d.h. sie verlaufen nicht so, wie man sie in einem Schwingungsdämpfer, der freie Kennliniengestaltung zuläßt, einstellen würde. Um dennoch einen näherungsweise schwingungsdämpfergerechten Verlauf der Kennlinien zu erreichen, müßten während eines Schwingungsdämpfer-Hubs Regelungseingriffe vorgenommen werden, d.h. es müßte der Steuerkammerabflußquerschnitt während eines Schwingungsdämpfer-Hubs verändert werden. Hierzu wären zusätzliche Sensoren, eine schnelle Signalverarbeitung und schnell reagierende Ventile erforderlich. Dies würde den Aufbau des Schwingungsdämpfers verkomplizieren und die Zuverlässigkeit des Schwingungsdämpfers vermindern.

Es ist die Aufgabe der Erfindung, einen Schwingungsdämpfer bereitzustellen, bei welchem schwingungsdämpfer-gerechte Kennlinien ohne zusätzlicne Regelungseingriffe während eines Dämpfer-Hubs gewährleistet werden können.

Erfindungsgemäß wird diese Aufgabe durch die in den Ansprüchen 1, 2 und 4 angegebenen Schwingungsdämpfer gelöst.

Besonders vorteilhafte Weiterbildungen des erfindungsgemäßen Schwingungsdämpfers sind Gegenstand der Unteransprüche.

Die Erfindung läßt sich bei verschiedenen Schwingungsdämpfertypen anwenden. Beispielsweise läßt sich die erfindung bei Zweirohr-Schwingungsdämpfern anwenden, wobei die die Ventilbaugruppe enthaltende Fluidenverbindung zwischen dem kolbenstangenseitigen Fluidenraum und dem Ausgleichsraum vorgesehen ist und wobei die Ventile in dem Schwingungsdämpferkolben und am Boden des Zylinders derart aufeinander abgestimmt sind, daß unabhängig von der Bewegungsrichtung der Kolbenstange relativ zum Zylinder ein Fluidenfluß durch die Fluidenverbindung stets in der gleichen Richtung, nämlich von der kolbenstangenseitigen Fluidenkammer zum Ausgleichsraum stattfindet. Bei einer solchen Ausführungsform ist die Ventilbaugruppe für die Betriebsweise mit härtester Dämpfung gesperrt, so daß lediglich die Ventile in dem Schwingungsdämpferkolben und im Boden des Zylinders öffnen. Für weichere Dämpfung wird der Querschnitt des Steuerkammerabflusses in unterschiedlichem Maße geöffnet, wobei die größte Öffnung des Steuerkammerabflusses der weichsten Dämpfung entspricht.

Dabei sind verschiedene Schaltungsmöglichkeiten für die Ventile einer Kolbenventilbaugruppe und die Ventile einer Bodenventilbaugruppe gegeben.

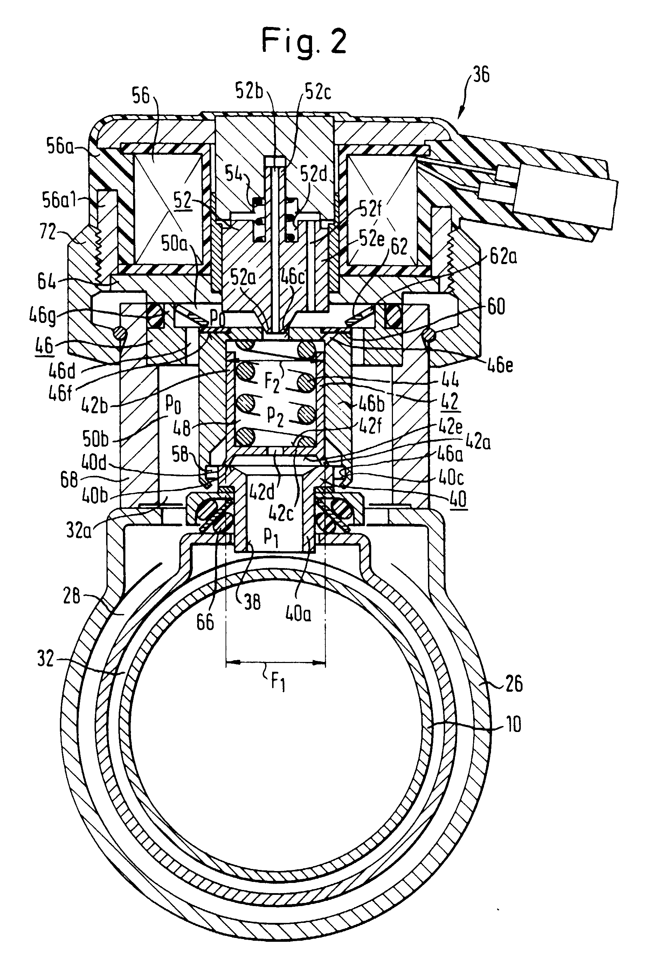

Eine erste Möglichkeit ist folgende:
Die Bodenventilbaugruppe umfaßt nur ein Rückschlagventil, welches beim Zughub öffnet und beim Druckhub schließt. Die Kolbenventilbaugruppe umfaßt nur ein Rückschlagventil, welches beim Druckhub öffnet und beim Zughub schließt. Bei dieser Ausführungsform bestimmen die Ventilbaugruppe und deren Steuerkammerabflußquerschnittsbemessungseinrichtung allein die Kennlinie im Zughub und im Druckhub. Diese erste Möglichkeit kann dahin abgewandelt sein, daß das beim Druckhub öffnende Rückschlagventil der Kolbenventilbaugruppe gedrosselt ist. Dann gilt wieder, daß beim Zughub die Dämpfungskennlinie allein durch die Absperrventilbaugruppe und deren Abflußquerschnittsbemessungseinrichtung bestimmt ist, während beim Druckhub die Dämpfungskennlinie zusätzlich durch die Drosselung in dem beim Druckhub öffnenden Rückschlagventil der Kolbenventilbaugruppe beeinflußt ist. Von dieser ersten, ggf. modifizierten, Möglichkeit wird in der folgenden Beispielsbeschreibung der Figuren 2 - 10 ausgegangen.

Eine zweite Möglichkeit ist diese:
Die Bodenventilbaugruppe umfaßt ein beim Zughub öffnendes Rückschlagventil und parallel zu diesem Rückschlagventil ein Dämpfungsventil, welches beim Druckhub einen gedrosselten Durchfluß zuläßt. Die Kolbenventilbaugruppe umfaßt ein beim Zughub öffnendes Rückschlagventil mit Drosselwirkung und ein beim Druckhub öffnendes Rückschlagventil mit oder ohne Drosselwirkung. Bei dieser zweiten Möglichkeit ist die Dämpfungswirkung beim Zughub und beim Druckhub nicht nur durch die Absperrventilbaugruppe und deren Steuerkammerabflußquerschnittsbemessungseinrichtung bestimmt, sondern zusätzlich auch durch die Kolbenventilbaugruppe bzw. die Bodenventilbaugruppe mitbeeinflußt, gleichgültig ob das beim Druckhub öffnende Rückschlagventil der Kolbenventilbaugruppe gedrosselt ist oder nicht. Die Betriebsweise mit härtester Dämpfung kommt zustande, wenn die Ventilbaugruppe gesperrt ist, so daß lediglich die Ventile der Bodenventilbaugruppe und der Kolbenventilbaugruppe wirksam sind.

Die Erfindung läßt sich aber auch auf sogenannte Einrohr-Schwingungsdämpfer anwenden, bei denen die Fluidenkammern beidseits des Schwingungsdämpfers, durch die die Ventilbaugruppe enthaltende Fluidenverbindung miteinander verbunden sind. Dabei kann es je nach Bauart der Ventilbaugruppe notwendig sein, für unterschiedliche Bewegungsrichtungen verschiedene Fluidenverbindungen zwischen den beiden Fluidenkammern vorzusehen, von denen jede mit einer erfindungsgemäß gestalteten Ventilbaugruppe ausgeführt ist. Auch bei Einrohr-Schwingungsdämpfern kann der Schwingungsdämpferkolben mit Dämpfungsventilen ausgerüstet sein, die wiederum für die Betriebsweise härtester Dämpfung bestimmt sind, nämlich dann, wenn die die Ventilbaugruppe enthaltende Fluidenverbindung vollständig geschlossen ist. Auch für diese Ausführungsform gilt, daß die weichste Dämpfung dann eintritt, wenn der Abflußquerschnitt der Steuerkammer auf das größte Maß eingestellt ist.

Der Erfindungsvorschlag ist nicht grundsätzlich an eine Ausführungsform gebunden, bei welcher die die Ventilbaugruppe enthaltende Fluidenverbindung an dem Zylinder angebracht ist. Es wäre grundsätzlich auch denkbar, die die Ventilbaugruppe enthaltende Fluidenverbindung innerhalb des Schwingungsdämpferkolbens oder am Ende des Zylinders anzubringen.

Nach einer bevorzugten Ausführungsform ist allerdings vorgesehen, daß die Ventilbaugruppe, im folgenden Absperrventilbaugruppe genannt, am Zylinder angebracht ist, weil bei dieser Ausführungsform die Zuleitung der Steuersignale zur Einstellung des Abflußquerschnitts des Steuerkammerabflusses vereinfacht ist.

Die beiliegenden Figuren erläutern die Erfindung anhand von Ausführungsbeispielen; es stellen dar:
- Figur 1: einen Schwingungsdämpfer mit Bypass und Absperrventilbaugruppe im Bypass;
- Figur 2 bis 10: verschiedene Ausführungsbeispiele der Absperrventilbaugruppe des Schwingungsdämpfers; und
- Figur 11 bis 13: verschiedene mit Schwingungsdämpfern erzielbare Kennlinienfelder.

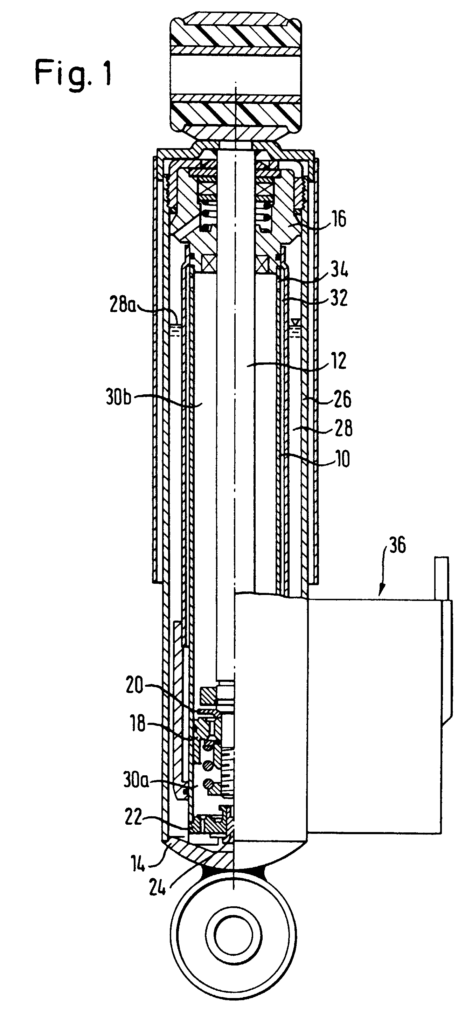

In Figur 1 ist der Zylinder eines Zweirohr-Schwingungsdämpfers mit 10 bezeichnet, die Kolbenstange mit 12. Der Zylinder ist nach unten durch einen Boden 14 abgeschlossen. Die Kolbenstange 12 ist durch eine Führungs- und Dichtungseinheit 16 aus dem oberen Ende des Zylinders herausgeführt. Innerhalb des Zylinders 10 ist an der Kolbenstange 12 eine Kolbeneinheit 18 mit einer Kolbenventilanordnung 20 befestigt. Das untere Ende des Zylinders ist durch eine Bodenplatte 22 mit einer Bodenventilanordnung 24 abgeschlossen. Der Zylinder 10 ist von einem Behälterrohr 26 umhüllt. Zwischen dem Behälterrohr 26 und dem Zylinder 10 ist ein Ringraum 28 gebildet, der einen Ausgleichsraum darstellt. Der Raum innerhalb des Zylinders 10 ist durch die Kolbeneinheit 18 in eine erste Arbeitskammer 30a und eine zweite Arbeitskammer 30b unterteilt. Die Arbeitskammern 30a und 30b sind mit Dämpfungsfluid gefüllt. Der Ausgleichsraum 28 ist bis zu dem Niveau 28a mit Flüssigkeit und darüber mit Gas gefüllt. Innerhalb des Ausgleichsraums 28 ist eine erste Teilstrecke, nämlich eine Hochdruckteilstrecke 32, gebildet, welche über eine Bohrung 34 des Zylinders mit der zweiten Arbeitskammer 30b in Verbindung steht. An diese Hochdruckteilstrecke 32 schließt sich eine seitlich an das Behälterrohr 26 angebaute Absperrventilbaugruppe 36 an. Von dieser führt (in Figur 1 nicht dargestellt) eine zweite Teilstrecke, nämlich eine Niederdruckteilstrecke, zu dem Ausgleichsraum 28 und zwar in dessen flüssigkeitsgefüllten Bereich.

Wenn die Kolbenstange 12 aus dem Zylinder 10 nach oben ausfährt, wird die obere Arbeitskammer 30b verkleinert. Es bildet sich in der oberen Arbeitskammer 30b ein Überdruck aus, der sich durch die Kolbenventilanordnung 20 in die untere Arbeitskammer 30a abbauen kann, solange die Absperrventilbaugruppe 36 geschlossen ist (Betriebsweise harter Dämpfung). Wenn die Absperrventilbaugruppe 36 geöffnet ist, so fließt gleichzeitig Flüssigkeit von der oberen Arbeitskammer 30b durch die Hochdruckteilstrecke 32 und die Absperrventilbaugruppe 36 in den Ausgleichsraum 28 (Betriebsweise weicher Dämpfung). Die Dämpfcharakteristik des Schwingungsdämpfers beim Ausfahren der Kolbenstange 12 ist also davon abhängig, ob die Absperrventilbaugruppe 36 offen oder geschlossen ist.

Wenn die Kolbenstange 12 in den Zylinder 10 einfährt, so bildet sich in der unteren Arbeitskammer 30a ein Überdruck. Flüssigkeit kann durch die Kolbenventilanordnung 20 nach oben in die obere Arbeitskammer 30b übergehen. Die durch das zunehmende Kolbenstangenvolumen innerhalb des Zylinders verdrängte Flüssigkeit wird durch die Bodenventilanordnung 24 in den Ausgleichsraum 28 ausgetrieben. In der oberen Arbeitskammer 30b tritt, da der Durchflußwiderstand der Kolbenventilanordnung 20 geringer ist als der Durchflußwiderstand der Bodenventilanordnung 24, ebenfalls ein steigender Druck auf. Dieser steigende Druck kann bei geöffneter Absperrventilbaugruppe 36 durch die Hochdruckteilstrecke 32 wiederum in den Ausgleichsraum 28 überfließen. Dies bedeutet, daß bei geöffneter Absperrventilbaugruppe 36 der Schwingungsdämpfer auch beim Einfahren dann eine weichere Dämpfcharakteristik hat, wenn die Absperrventilbaugruppe 36 geöffnet ist, und eine härtere Dämpfcharakteristik, wenn die Absperrventilbaugruppe 36 geschlossen ist, genauso wie beim Ausfahren der Kolbenstange. Festzuhalten ist, daß die Strömungsrichtung durch die Hochdruckteilstrecke 32 des Bypasses immer die gleiche ist, gleichgültig, ob die Kolbenstange einfährt oder ausfährt.

In Figur 2 erkennt man im Schnitt den Zylinder 10, die erste Teilstrecke 32 des Bypasses und den Ausgleichsraum 28. An die erste Teilstrecke 32 schließt sich ein Zentralkanal 38 an, welcher von einem nach unten abstehenden Rohrstutzen 40a eines Ventilsitzkörpers 40 umgrenzt ist. Die in Figur 2 oben gelegene Seite des Ventilsitzkörpers 40 bildet einen Ventilsitz 40b. Auf dem Ventilsitz 40b liegt ein Ringflansch 42a eines topfförmig ausgebildeten Ventilabsperrelements 42 auf. Das Ventilabsperrelement 42 ist in Richtung auf den Ventilsitz 40b hin durch eine Schraubendruckfeder 44 vorgespannt, welche von der Innenseite der rohrförmig ausgebildeten Seitenwand 42b des Ventilabsperrelements 42 geführt ist und welche sich an einem Zwischenkörper 46 abstützt. Der Ventilsitzkörper 40 greift mit seinem äußeren Umfangsrand 40c in Ausnehmungen 46a ein, welche in der Seitenwand 46b des Zwischenkörpers 46 vorgesehen sind, und haltert somit den Zwischenkörper 46. Bei geöffenetem Absperrventil 42,40b kann Dämpfungsflüssigkeit über einen Hauptstrompfad, d.h. zwischen dem Ventilabsperrelement 42 und dem Ventilsitz 40b hindurch und weiter durch Durchgänge 58, welche von der Seitenwand 46b des Zwischenkörpers 46 und Ausnehmungen 40d im Ventilsitzkörper 40 festgelegt sind, zum Ausgleichsraum 28 hin fließen.

Der Zentralkanal 38 ist über eine in einem Bodenteil 42c des Ventilabsperrelements 42 ausgebildete Drosselbohrung 42d mit einer Steuerkammer 48 verbunden, welche zwischen dem Ventilabsperrelement 42 und dem Zwischenkörper 46 ausgebildet ist. Das Ventilabsperrelement 42 bietet dem im Zentralkanal 38 herrschenden Druck p₁ an seiner Vorderseite 42e eine Beaufschlagungsfläche F₁ und dem in der Steuerkammer 48 herrschenden Druck p₂ an seiner Rückseite 42f eine Beaufschlagungsfläche F₂ dar. Die Flächen F₁ und F₂ sind in dem in Figur 2 dargestellten Ausführungsbeispiel im wesentlichen gleich groß.

Solange nur die Schraubendruckfeder 44 gegen das Ventilabsperrelement 42 einwirkt, verhält sich das Absperrventil 42,40b als ein federbelastetes, unter Druck öffnendes Ventil, welches beim Aufwärtshub der Kolbenstange 12 in Figur 1 zu der Kolbenventilanordnung 20 parallel geschaltet ist und beim Abwärtshub der Kolbenstange 12 in Figur 1 zu der Bodenventilanordnung 24 parallel geschaltet ist.

Der Öffnungsquerschnitt eines im Zwischenkörper 46 ausgebildeten Steuerkammerabflusses 46c kann durch einen Magnetanker 52 von außen gesteuert werden. Bei geöffnetem Steuerkammerabfluß 46c bilden die Drosselbohrung 42d, die Steuerkammer 48, der Steuerkammerabfluß 46c, eine in Flußrichtung hinter dem Zwischenkörper 46 ausgebildete Kammer 50a, im Zwischenkörper vorgesehene Bohrungen 46d und ein Kanal 50b einen Nebenstrompfad für Dämpfungsflüssigkeit, welcher parallel zum Hauptstrompfad verläuft.

Ein Magnetanker 52 ist durch eine Magnetanker-Vorspannfeder 54 in Figur 2 nach unten in Richtung auf den Steuerkammerabfluß 46c hin vorgespannt, so daß der Magnetanker 52 den Steuerkammerabfluß 46c mit einem konischen Kopfteil 52a verschließt, wenn eine den Magnetanker 52 beaufschlagende Magnetwicklung 56 nicht mit Strom beschickt ist. Wird die Magnetwicklung 56 mit Strom beschickt, so wird der Magnetanker 52 entgegen der Kraft der Feder 54 angehoben und gibt den Steuerkammerabfluß 46c frei. Je nachdem, wieviel Strom durch die Magnetwicklung 56 geschickt wird, ist der Magnetanker 52 in eine Mehrzahl von Stellungen einstellbar, so daß der Öffnungsquerschnitt des Steuerkammerabflusses 46c eine Mehrzahl von Werten annehmen kann.

Eine Bohrung 52b durchsetzt den Magnetanker 52 von der Spitze des konischen Kopfteils 52a bis zu einem rohrförmigen Ansatz 52c, welcher an der in Figur 2 oben gelegenen Rückseite des Magnetankers 52 angeordnet ist. Der rohrförmige Ansatz 52c weist an seinem äußeren Umfang den gleichen Durchmesser auf wie die Steuerkammerabflußbohrung 46c. Der in der Steuerkammer 48 herrschende Druck p₂ beaufschlagt somit gleich große Flächen auf Vorder- und Rückseite des Magnetankers 52 und kann somit insgesamt keine Kraft auf den Magnetanker 52 ausüben. Der rohrförmige Ansatz 52c dient auch als Führung der Magnetanker-Vorspannfeder 54, welche teilweise in einer an der Rückseite des Magnetankers 52 ausgebildeten Ringnut 52d aufgenommen ist. Eine den Körper 52e des Magnetankers 52 durchsetzende Bohrung 52f verbindet die vom Druck p₀ im Ausgleichsraum 28 beaufschlagte Vorderseite des Körpers 52e des Magnetankers mit der Rückseite des Magnetankers 52. Da die Vorderseite und die Rückseite des Magnetankers 52 eine gleich große Fläche aufweisen, kann auch der Druck p₀ keine Kraft auf den Magnetanker 52 ausüben.

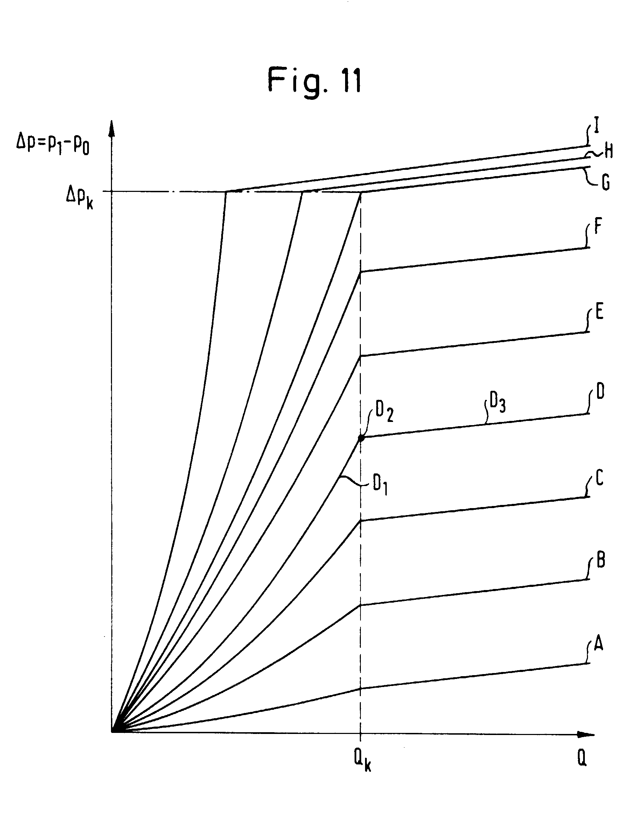

Im folgenden soll der Verlauf der Schwingungsdämpfer-Kennlinie anhand der Figuren 2 und 11 näher erläutert werden. In Figur 11 ist an der Ordinate die Gesamtdruckdifferenz Δp (= p₁-p₀) zwischen dem in der Hochdruckteilstrecke 32 und somit im Zentralkanal 38 herrschenden Druck p₁ und dem im Ausgleichsraum 28 herrschenden Druck p₀ aufgetragen und an der Abszisse die Gesamtdurchflußrate Q (Durchflußmenge pro Zeiteinheit) von Dämpfungsflüssigkeit durch die Absperrventilbaugruppe 36 aufgetragen. Die Gesamtdurchflußrate Q ist die Summe der Durchflußraten der über den Hauptstrompfad (Hauptstromdurchflußrate) und den Nebenstrompfad (Nebenstromdurchflußrate) fließenden Dämpfungsflüssigkeit. Die verschiedenen in Figur 11 aufgetragenen Kennlinien entsprechen verschiedenen Werten des Steuerkammerabflußquerschnitts, d.h. verschiedenen Stellungen des Magnetankers 52.

Es sei nun zunächst angenommen, daß die Magnetwicklung 56 in Figur 2 nicht stromdurchflossen ist, so daß der Magnetanker 52 unter Wirkung der Vorspannfeder 54 den Steuerkammerabfluß 46c verschließt. In diesem Fall herrscht in der Steuerkammer 48 der gleiche Druck wie im Zentralkanal 38. Da die Beaufschlagungsflächen F₁ auf der Vorderseite 42e des Ventilabsperrelements 42 und F₂ auf der Rückseite 42f des Ventilabsperrelements 42 gleich groß sind, wird das Ventilabsperrelement 42 durch die Kraft der Feder 44 auf dem Ventilsitz 40b gehalten. Bis auf Leckströme wird die Absperrventilbaugruppe 36 somit nicht von Dämpfungsflüssigkeit durchströmt (Q = 0 in Figur 11).

Wenn die Magnetwicklung 56 mit Strom einer bestimmten Stromstärke beschickt wird, so wird der Magnetanker 52 entgegen der Kraft der Feder 54 angehoben und nimmt eine der Stromstärke entsprechende Stellung ein. Der Querschnitt des hierdurch freigegebenen Steuerkammerabflusses 46c ist umso größer, je mehr Strom durch die Magnetwicklung 56 fließt.

Nunmehr kann Dämpfungsflüssigkeit vom Zentralkanal 38 durch die Drosselbohrung 42d in die Steuerkammer 48 fließen und von dort weiter durch den Steuerkammerabfluß 46c zum Ausgleichsraum 28 gelangen. Die durch die Drosselstrecke 42d und den Steuerkammerabfluß 46c fließende Nebenstromdurchflußrate bewirkt einen Druckabfall vom Druck p₁ im Zentralkanal 38 zum Druck p₂ in der Steuerkammer 48 und einen Druckabfall vom Druck p₂ in der Steuerkammer 48 zum Druck p₀ im Ausgleichsraum 28. Steigt nun der Druck p₁ im Zentralkanal 38 und somit auch die Gesamtdruckdifferenz p₁-p₀ zwischen Zentralkanal 38 und Ausgleichsraum 28 an, so nimmt auch die Nebenstromdurchflußrate zu. Gemäß dem Bernoulli'schen Gesetz folgt aus einer gegebenen Durchflußrate durch eine Drosselstrecke konstanten Öffnungsquerschnitts ein Druckabfall, welcher proportional zum Quadrat der Durchflußrate ansteigt. Dementsprechend steigen sowohl die Druckdifferenz p₁-p₂ zwischen dem im Zentralkanal 38 herrschenden Druck p₁ und dem in der Steuerkammer 48 herrschenden Druck p₂ als auch die Druckdifferenz p₂-p₀ zwischen dem in der Steuerkammer 48 herrschenden Druck p₂ und dem im Ausgleichsraum 28 herrschenden Druck p₀ mit zunehmender Nebenstromdurchflußrate Q parabolisch an, so daß sich auch für die Gesamtdruckdifferenz p₁-p₀ ein parabolischer Verlauf ergibt. (bspw. Kurvenabschnitt D₁ in Figur 11).

Erreicht die Nebenstromdurchflußrate einen Wert Qₖ, so ist die infolge des Drucks p₁ im Zentralkanal 38 auf die Fläche F₁ an der Vorderseite 42e des Ventilabsperrelements 42 wirkende hydraulische Kraft gleich groß wie die Summe der infolge des Drucks p₂ in der Steuerkammer 48 auf die Fläche F₂ an der Rückseite 42f des Ventilabsperrelements 42 wirkenden hydraulischen Kraft und der Kraft der Feder 44 (bspw. Punkt D₂ in Figur 11).

Übersteigt die Nebenstromdurchflußrate den Wert Qₖ, so überwiegt die auf die Vorderseite 42e des Ventilabsperrelements 42 wirkende hydraulische Kraft und das Ventilabsperrelement 42 hebt vom Ventilsitz 40b ab. Nunmehr kann Dämpfungsflüssigkeit über den Hauptstrompfad in den Ausgleichsraum 28 gelangen. Daneben bleibt aber immer noch ein gewisser Nebenstrom durch die Drosselstrecke 42d und den Steuerkammerabfluß 46c bestehen. Da die Gesamtdurchflußrate Q nunmehr jedoch von dem federbelasteten Ventil 42,40b dominiert wird, variiert die Gesamtdruckdifferenz p₁-p₀ zwischen dem Druck p₁ im Zentralkanal 38 und dem Druck p₀ im Ausgleichsraum 28 nunmehr im wesentlichen direkt proportional zur Gesamtdurchflußrate Q (bspw. Kurvenabschnitt D₃ in Figur 11).

Je größer der Querschnitt des Steuerkammerabflusses 46c ist, desto größer ist bei vorgegebener Druckdifferenz p₁-p₀ auch die durch die Drosselstrecke 42d und den Steuerkammerabfluß 46c bestimmte Nebenstromdurchflußrate. Folglich verläuft der durch den gedrosselten Nebenstrom bestimmte, parabelförmige erste Abschnitt der Dämpfer-Kennlinie umso flacher, je größer der Steuerkammerabflußquerschnitt 46c ist (Kurven C, B und A in Figur 11). Da für das Abheben des Ventilabsperrelements 42 vom Ventilsitz 40b jedoch, wie vorstehend erläutert, lediglich die Druckdifferenz p₁-p₂, nicht aber der Absolutwert der Drücke p₁ und p₂ entscheidend ist und diese Druckdifferenz p₁-p₂ nur von der Nebenstromdurchflußrate abhängt, öffnet das Hauptstromventil 42,40b unabhängig vom Steuerkammerabflußquerschnitt 46c immer bei der gleichen Durchflußrate Qₖ, wie dies in Figur 11 durch die zur Druckachse parallel verlaufende gestrichelte Linie angedeutet ist. Je größer der Öffnungsquerschnitt des Steuerkammerabflusses 46c ist, d.h. je flacher die Schwingungsdämpfer-Kennlinie verläuft, desto weicher und komfortabler ist die Dämpfungscharakteristik des Schwingungsdämpfers.

Der Stromfluß durch die Magnetwicklung 56 kann beispielsweise in Abhängigkeit von den Fahrverhältnissen des Fahrzeugs gesteuert werden, so daß in jedem Fahrzustand ein optimaler Kompromiß zwischen Fahrkomfort und Fahrsicherheit gewährleistet ist. Beispielsweise kann man den Speisestrom für die Magnetwicklung 56 durch einen Prozessor vorgeben, welcher durch einen oder mehrere Sensoren angesteuert werden kann, beispielsweise Fahrzeugsbeschleunigungssensor, Nickwinkelsensor und Wankwinkelsensor.

Darüberhinaus ist es auch denkbar, die Stromstärke durch die Magnetwicklung 56 vom Fahrzeughersteller oder Fahrzeugbenutzer her willkürlich zu beeinflussen, um eine mehr oder minder komfortable bzw. sportliche Betriebsart zu wählen. Bezogen auf Figur 11 bedeutet A eine extrem komfortable Kennlinie, während G, H und I sportliche Kennlinien darstellen.

Der topfförmige Zwischenkörper 46 in Figur 2 weist Bohrungen 46e auf, welche von einem ringscheibenförmigen Ventilkörper 60 verschlossen sind. Die Ringscheibe 60 ist in einer Ringnut 46f des Zwischenkörpers 46 aufgenommen. Eine mit Ausnehmungen 62a versehene Tellerfeder 62 spannt die Ringscheibe 60 in die Ausnehmungen 46f vor. Die Tellerfeder 62 stützt sich in axialer Richtung an einer Platte 64 und in radialer Richtung an einem am Zwischenkörper 46 ausgebildeten Ringflansch 46g ab. Die Bohrungen 46e, die Ringscheibe 60 und die Tellerfeder 62 bilden ein Überdruckventil, welches den maximalen Druck in der Steuerkammer 48 begrenzt. Erreicht der Druck in der Steuerkammer 48 diesen Grenzwert, bevor das Hauptstromventil 42,40b geöffnet hat, so öffnet das Überdruckventil 60,46e und bildet eine zusätzliche Abflußmöglichkeit für Dämpfungsflüssigkeit aus der Steuerkammer 48. Die Abflußbohrungen 46e sind derart bemessen, daß hierdurch der Druck p₂ in der Steuerkammer 48 soweit zusammenbricht, daß das Hauptstromventil 42,40b öffnet. Bei steil verlaufendem, parabolischem ersten Kennlinienabschnitt (Kurven G, H und I in Figur 11) öffnet das Hauptstromventil 42,40b also nicht durchflußraten-abhängig, sondern druckabhängig, wie in Figur 11 durch die parallel zur Durchflußratenachse verlaufende strich-punktierte Linie angedeutet ist.

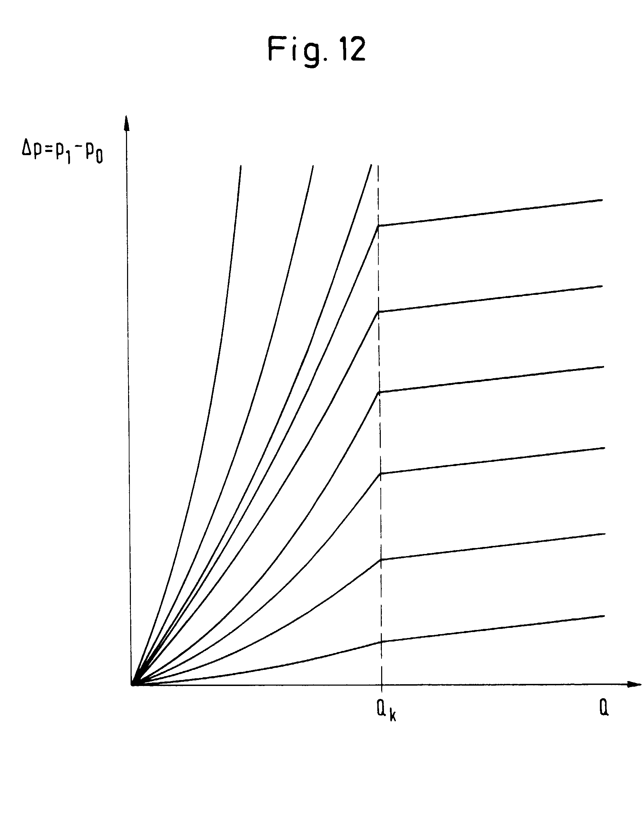

Falls die Steuerkammer 48 der Absperrventilbaugruppe über kein Überdruckventil verfügt, ergibt sich die in Figur 12 dargestellte Kennlinienschar.

Wenn das Hauptstromventil 42,40b in Figur 2 wieder geschlossen werden soll, so muß hierzu lediglich der Strom durch die Magnetwicklung 56 abgeschaltet werden. Der Magnetanker 52 verschließt dann infolge der Kraft der Feder 54 den Steuerkammerabfluß 46c. Somit kann keine Dämpfungsflüssigkeit mehr aus der Steuerkammer 48 in den Ausgleichsraum 28 entweichen. Folglich baut sich in der Steuerkammer 48 wieder der gleiche Druck auf, der auch im Zentralkanal 38 herrscht und das Ventilabsperrelement 42 wird durch die Kraft der Feder 44 wieder auf den Ventilsitz 40b gedrückt.

Der Ventilsitzkörper 40 ist durch eine Dichtung 66 an die erste Teilstrecke 32 des Bypasses dicht angeschlossen. Der Ventilsitzkörper 40 und der Zwischenkörper 46 sind in einen Rohrstutzen 68 eingesetzt, welcher mit dem Behälter 26 verschweißt ist. Der zwischen dem Rohrstutzen 68 und der Seitenwand 46b des Zwischenkörpers 46 angeordnete Kanal 50b bildet die zweite Teilstrecke 32a des Bypasses. Die Teilstrecken 32 und 32a bilden zusammen den Bypass.

Die Platte 64 kann zusammen mit den der Magnetwicklung 56 zugehörigen Eisenteilen und Gehäuseteilen eine Baueinheit bilden. Es ist auch möglich, sämtliche Teile der Absperrventilbaugruppe 36 nacheinander an dem Rohrstutzen 68 anzubringen und letztlich den Rohrstutzen 68 durch eine Überwurfmutter 72 mit dem Magnetwicklungsgehäuse 56a oder einem Gewindeeinsatz 56a1 des Magnetwicklungsgehäuses 56a zu verbinden.

Bei angezogenem Magnetanker 52 wirken die Drosselbohrung 42d und der Steuerkammerabfluß 46c nicht einfach als Voröffnungsdurchlaß des druckabhängigen Hauptstromventils 42,40b, sondern stellen einen zum Hauptstrompfad parallel verlaufenden Nebenstrompfad für Dämpfungsflüssigkeit bereit. Die Bohrungen 42d und 46c sind so groß bemessen, daß bei vollständig zurückgezogenem Magnetanker 52, d.h. bei maximalem Öffnungsquerschnitt des Steuerkammerabflusses 46c, das Ventilabsperrelement 42 erst dann vom Ventilsitz 40b abzuheben beginnt, wenn die Nebenstromdurchflußrate durch den Steuerkammerabfluß 46c mindestens das 0,2-fache der Gesamtdurchflußrate, d.h. der Summe aus Hauptstromdurchflußrate und Nebenstromdurchflußrate, durch die Absperrventilbaugruppe 36 beträgt, welche sich bei einer Dämpfergeschwindigkeit von 1 m/sec einstellt. Beträgt sowohl der maximale Öffnungsquerschnitt des Steuerkammerabflusses 46c als auch der Querschnitt der Drosselstrecke 42d mindestens 1/150 des Fluidverdrängungsquerschnitts des Schwingungsdämpfers, d.h. des Querschnitts des Kolbens 18 in der Druckstufe, so kann gewährleistet werden, daß das Abheben des Ventilabsperrelements 42 bei maximalem Öffnungsquerschnitt des Steuerkammerabflusses 46c bei niedrigen Drücken, d.h. bei Pkw-Schwingungsdämpfern bspw. unterhalb von 15 bar, stattfindet.

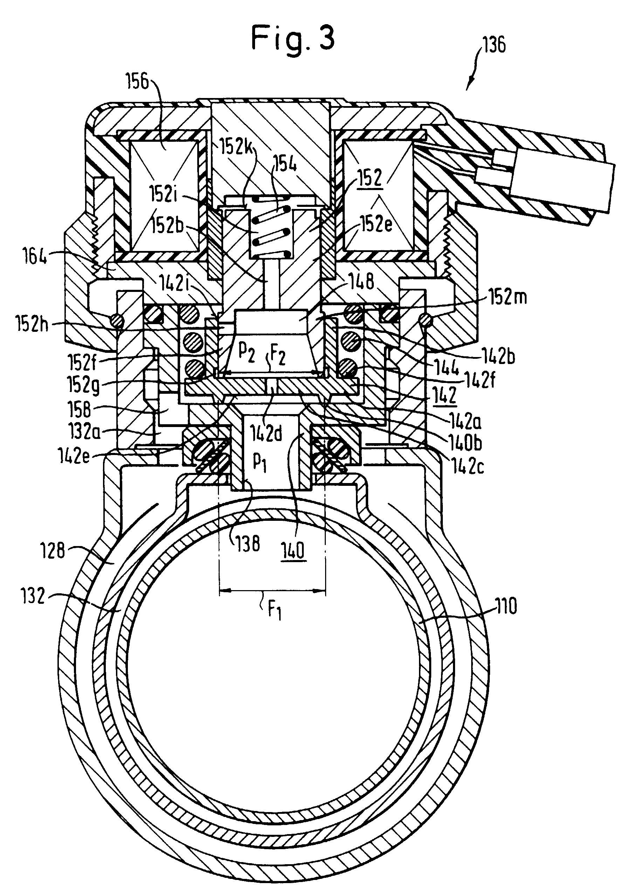

In Figur 3 ist ein zweites Ausführungsbeispiel einer Absperrventilbaugruppe dargestellt, mit welchem sich Schwingungsdämpfer-Kennlinien gemäß Figur 11 erzielen lassen. Dieses Ausführungsbeispiel entspricht in Aufbau und Funktion im wesentlichen dem in Figur 2 gezeigten Ausführungsbeispiel. Im folgenden wird das zweite Ausführungsbeispiel daher nur insoweit beschrieben als es sich von dem in Figur 2 gezeigten Ausführungsbeispiel unterscheidet, wobei analoge Teile mit gleichen Bezugszeichen versehen sind wie in Figur 2, jedoch vermehrt um die Zahl 100.

In dem Ausführungsbeispiel gemäß Figur 3 ist das Steuerkammerabflußventil von einem Schieberventil gebildet. Das Bodenteil 142c des topfförmig ausgebildeten Ventilabsperrelement 142 weist einen größeren Außendurchmesser auf als die rohrförmige Seitenwand 142b. Eine Schraubendruckfeder 144 stützt sich mit ihrem einen Ende an dem überstehenden Bereich des Bodenteils 142c ab und spannt das Ventilabsperrelement 142 mit einem Ringflansch 142a gegen den Ventilsitz 140b vor. Der Magnetanker 152 ist mit einem rohrförmigen Ansatz 152f ausgebildet, welcher in der rohrförmigen Seitenwand 142b des Ventilabsperrelements 142 geführt ist. Der Ansatz 152f ist mit in axialer Richtung davon abstehenden Vorsprüngen 152g versehen, mit welchen der Ansatz 152f auf dem Ventilabsperrelement 142 aufsitzt, wenn die den Magnetanker 152 beaufschlagende Magnetwicklung 156 nicht mit Strom beschickt ist. Der vom Magnetanker 152 und dem Ventilabsperrelement 142 umgrenzte Raum bildet die Steuerkammer 148. Der Zentralkanal 138 ist mit der Steuerkammer 148 über eine Drosselbohrung 142d verbunden. Der Ansatz 152f weist Radialbohrungen 152h auf, welche einen Steuerkammerabfluß bilden und vollständig von der rohrförmigen Seitenwand 142b des Ventilabsperrelements 142 bedeckt sind, wenn der Magnetanker 152 mit seinen Vorsprüngen 152g auf dem Ventilabsperrelement 142 aufsitzt. Wird die Magnetwicklung 156 mit Strom beschickt und der Magnetanker 152 entgegen der Kraft der Feder 154 angehoben, so wird der Querschnitt der Bohrungen 152h teilweise von einer Steuerkante 142i freigegeben. Die Größe des Querschnitts wird durch die Stromstärke des Wicklungsstroms bestimmt. Durch den Steuerkammerabfluß 152h ausgetretene Dämpfungsflüssigkeit kann weiter durch in dem topfförmigen Ventilsitzkörper 140 ausgebildete Durchgänge 158 zum Ausgleichsraum 128 fließen.

Die Funktion eines Überdruckventil wird in diesem Ausführungsbeispiel ebenfalls von dem Magnetanker erfüllt. Der in der Steuerkammer 148 herrschende Druck p₂ wird über eine Bohrung 152b und eine die Magnetanker-Vorspannfeder 154 aufnehmende Federkammer 152i an die Rückseite 152k weitergeleitet. Der rohrförmige Ansatz 152m weist einen größeren Außendurchmesser auf als der Körper 152e des Magnetankers 152. Die der Steuerkammer 148 zugewandte Stirnfläche des Magnetankers 152 bietet dem Druck p₂ daher eine größere Beaufschlagungsfläche als die Rückseite 152k. Hieraus resultiert eine in Richtung auf eine Öffnung des Steuerkammerabflusses 142i,152h hin gerichtete Kraft. Übersteigt der Druck p₂ in der Steuerkammer 148 einen vorgegebenen Wert, so ist die vom Druck p₂ auf den Magnetanker 152 ausgeübte hydraulische Kraft größer als die Kraft der Magnetanker-Vorspannfeder 154. In der Folge gibt der Magnetanker 152 den Steuerkammerabfluß 142i,152h frei, ohne daß die Magnetwicklung 156 zuvor mit Strom beschickt worden wäre.

Auch in diesem Ausführungsbeispiel sind die Flächen F₁ und F₂ des Ventilabsperrelements 142 gleich groß, so daß sich ähnliche Schwingungsdämpfer-Kennlinien ergeben wie die in Figur 11 dargestellten.

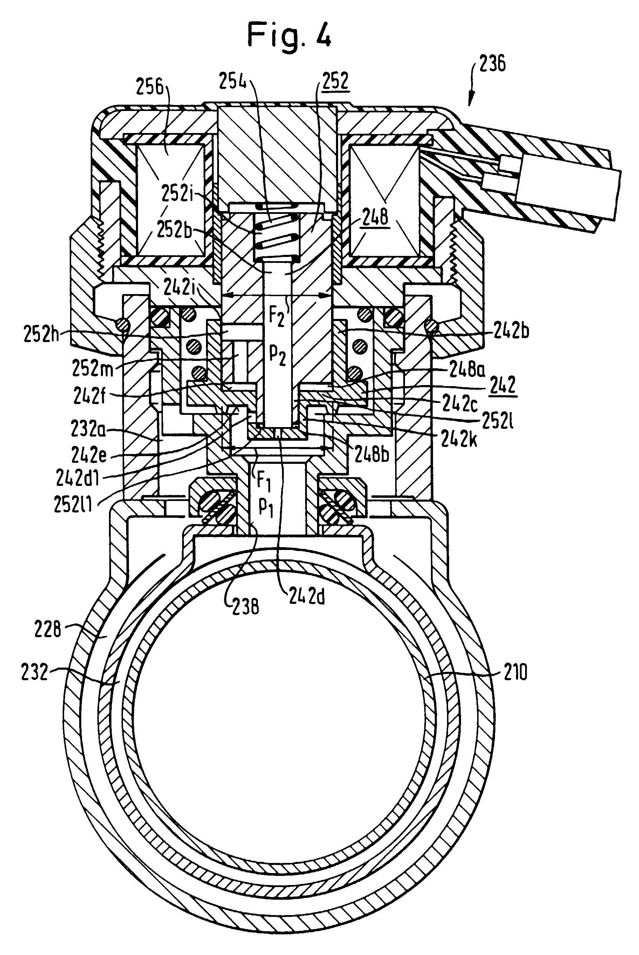

In Figur 4 ist ein weiteres Ausführungsbeispiel einer Absperrventilbaugruppe dargestellt, welches in Aufbau und Funktion im wesentlichen den in den Figuren 2 und 3 gezeigten Ausführungsbeispielen entspricht. Im folgenden wird dieses Ausführungsbeispiel daher nur insoweit beschrieben als es sich von den vorstehend beschriebenen Ausführungsbeispielen unterscheidet, wobei analoge Teile mit gleichen Bezugszeichen versehen sind wie in Figur 2, jedoch vermehrt um die Zahl 200.

Das Ventilabsperrelement 242 ist in diesem Ausführungsbeispiel ebenfalls topfförmig ausgebildet, wobei der Boden 242c des Topfes mit einem topfförmigen Ansatz 242k ausgebildet ist. Der Magnetanker 252 ist in der rohrförmigen Seitenwand 242b des Ventilabsperrelements 242 geführt und weist seinerseits einen Rohransatz 252l auf, welcher in den Ansatz 242k eingreift. Eine Bohrung 252b erstreckt sich vom Rohransatz 252l zu einer an der Rückseite des Magnetankers gelegenen Federkammer 252i, in welcher die Magnetanker-Vorspannfeder 254 aufgenommen ist. Von der Bohrung 252b zweigen Radialbohrungen 252h ab. Von diesen Radialbohrungen 252h zweigen Bohrungen 252m ab, welche sich in einen Ringraum 248a öffnen. Ein zwischen dem Rohransatz 252l des Magnetankers 252 und dem Topfansatz 242k des Ventilabsperrelements 242 ausgebildeter Raum 248b, die Bohrungen 252b, 252h und 252m, der Ringraum 248a, die Federkammer 252i und der Raum oberhalb des Magnetankers 252 bilden die Steuerkammer 248.

Die Radialbohrungen 252h und die Steuerkante 242i bilden auch bei diesem Ausführungsbeispiel den im Querschnitt veränderbaren Steuerkammerabfluß. Der Zentralkanal 238 steht mit der Steuerkammer 248 zum einen über eine Drosselbohrung 242d konstanten Öffnungsquerschnitts und zum anderen über eine Drosselbohrung 242d1 in Verbindung, welche von dem Rohransatz 252l des Magnetankers 252 verschlossen ist, wenn die Magnetwicklung 256 nicht mit Strom beschickt ist. Wird der Magnetanker 252 jedoch durch die Magnetkraft der Wicklung 256 zurückgezogen, so bilden die Bohrung 242d1 und eine Steuerkante 252l1 des Rohransatzes 252l des Magnetankers 252 eine Drosselstrecke veränderbaren Querschnitts, welche zur Drosselstrecke 242d konstanten Öffnungsquerschnitts parallel geschaltet ist. Es soll festgehalten werden, daß sich der Querschnitt der Drosselstrecke 242d1 in Abhängigkeit von der Stellung des Magnetankers 252 genauso verhält wie der Querschnitt des Steuerkammerabflusses 252h, beide Querschnitte werden umso größer je weiter der Magnetanker 252 durch die Magnetkraft der Wicklung 256 zurückgezogen wird. Da die Bohrungen 252h einen größeren Durchmesser aufweisen als die Drosselbohrung 242d1, steigt der Querschnitt des Steuerkammerabflusses 252h beim Anheben des Magnetankers jedoch stärker an als der Gesamtquerschnitt der Drosselstrecken 242d und 242d1.

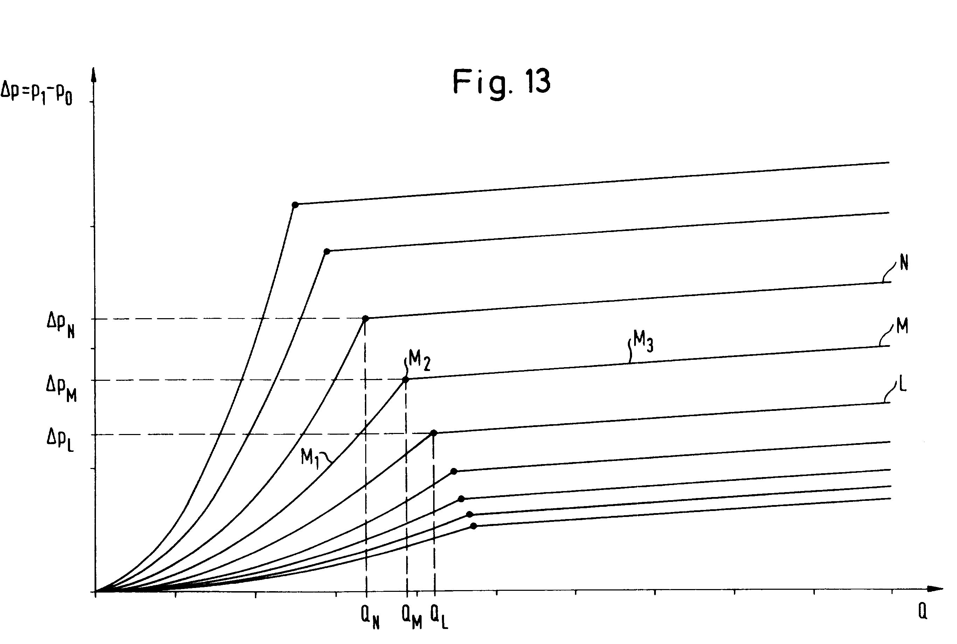

Im folgenden sollen nunmehr anhand der Figuren 4 und 13 die Auswirkungen eines derart veränderbaren Drosselstreckenquerschnitts auf die Schwingungsdämpfer-Kennlinien erläutert werden. Bei vorgegebener Stromstärke durch die Magnetwicklung 256 weisen die Drosselstrecken 242d und 242d1 zusammen einen bestimmten Querschnitt auf, der zusammen mit dem Querschnitt des Steuerkammerabflusses 252h die Nebenstromdurchflußrate von Dämpfungsflüssigkeit bestimmt. Die Dämpfer-Kennlinie, bspw. die Kennlinie M in Figur 13, ist aus den im Zusammenhang mit dem Kennlinienfeld in Figur 11 erläuterten Gründen in einen parabolisch verlaufenden, durch die Drosselstrecken 242d und 242d1 bestimmten ersten Kennlinienabschnitt M₁ und einen im wesentlichen linear verlaufenden und von dem federbelasteten Ventil 242,240b bestimmten zweiten Kennlinienabschnitt M₃ unterteilt. Die beiden Kennlinienabschnitte M₁ und M₃ gehen im Knickpunkt M₂ ineinander über.

Wird der Magnetanker 252 nun etwas weiter zurückgezogen, so wird nicht nur der Querschnitt des Steuerkammerabflusses 252h vergrößert, sondern auch der Gesamtquerschnitt der Drosselstrecken 242d und 242d1. Die Nebenstromdurchflußrate steigt somit an und die Dämpfer-Kennlinien verlaufen entsprechend flacher (bspw. Kurve L in Figur 13). Da die vom Druck p₁ im Zentralkanal 238 beaufschlagte Fläche F₁ an der Vorderseite 242e des Ventilabsperrelements 242 wiederum im wesentlichen gleich groß ist wie die auf der Rückseite 242f vom Druck p₂ in der Steuerkammer 248 beaufschlagte Fläche F₂ des Ventilabsperrelements 242, hängt die resultierende hydraulische Gesamtkraft auf das Ventilabsperrelement 242 wiederum nur von der Druckdifferenz p₁-p₂ ab und nicht vom Absolutwert der Drücke p₁ und p₂. Die zum Öffnen des Hauptstromventils notwendige Druckdifferenz p₁-p₂ wird bei einem größeren Drosselquerschnitt erst bei einer höheren Nebenstromdurchflußrate, bspw. Q_{L}, erreicht. Da der Querschnitt des Steuerkammerabflusses 252h stärker steigt als der Gesamtquerschnitt der Drosselstrecken 242d und 242dl, ist die Nebenstromdurchflußrate hauptsächlich durch den Gesamtquerschnitt der Drosselstrecken 242d und 242d1 begrenzt und die Gesamtdruckdifferenz p₁-p₀ zwischen dem im Zentralkanal 238 herrschenden Druck p₁ und dem im Ausgleichsraum 228 herrschenden Druck p₀ fällt hauptsächlich an den Drosselstrecken 242d und 242dl ab. Somit sinkt die Gesamtdruckdifferenz p₁-p₀, bei welcher die zum Öffnen des Haupstromventils erforderliche Druckdifferenz pₗ-p₂ erreicht wird, umso mehr ab, je mehr der Magnetanker 252 angezogen wird. Insgesamt verschiebt sich daher der Übergangspunkt vom parabolisch verlaufenden ersten Kennlinienabschnitt zum linear verlaufenden zweiten Kennlinienabschnitt zu niedrigeren Druckdifferenzen (d.h. von Δp_{N} zu Δp_{L} hin) und höheren Durchflußraten (d.h. von Q_{N} zu Q_{L} hin).

Die in Figur 13 dargestellte Kennlinienschar entspricht einer Kennlinienschar, welche man beispielsweise auch dann erhält, wenn man einen Schwingungsdämpfer nach den Erfahrungen der Dämpferabstimmung der jeweiligen Fahrsituation entsprechend abstimmt und die so erhaltenen Kennlinien in ein gemeinsames Diagramm einträgt. Die Kennlinenschar aus Figur 13 erfüllt somit die Forderung nach schwingungsdämpfer-gerechten -gerechten Kennlinien in höchstem Maße.

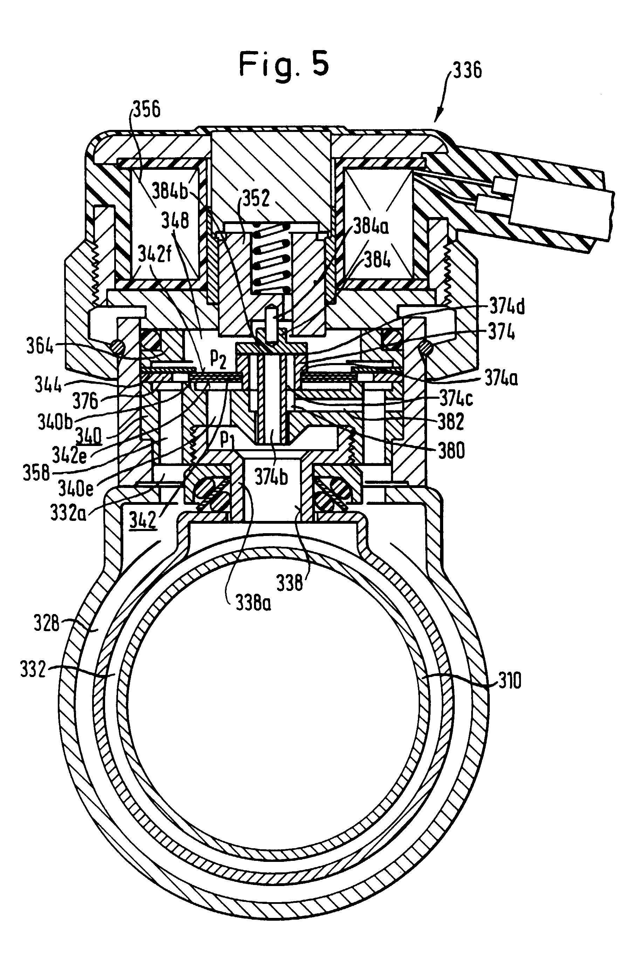

In Figur 5 ist ein weiteres nicht erfindungsgemäßes Ausführungsbeispiel einer Absperrventilbaugruppe dargestellt. Im folgenden wird dieses Ausführungsbeispiel nur insoweit beschrieben als es sich von den vorstehend beschriebenen Ausführungsbeispielen unterscheidet, wobei analoge Teile mit gleichen Bezugszeichen versehen sind wie in Figur 2, jedoch vermehrt um die Zahl 300.

In dem nicht erfindungsgemäßen Ausführungsbeispiel gemäß Figur 5 ist der Ventilsitzkörper 340 auf einem den Zentralkanal 338 begrenzenden Rohrteil 338a angeordnet. Der im Zentralkanal 338 herrschende Druck p₁ wird über Zuströmbohrungen 340e an die Vorderseite 342e des Ventilabsperrelements 342 weitergeleitet. Das Ventilabsperrelement 342 ist von einem Stapel Tellerfedern gebildet, welche durch eine weitere Tellerfeder 344 gegen den Ventilsitz 340b vorgespannt sind. Mit ihrem inneren Umfangsrand werden die Tellerfedern 342 durch den Druck p₁ gegen eine an einem Durchflußkörper 374 ausgebildete Schulter 374a gedrückt und stützen sich an ihr ab. Auf seiner Rückseite 342f wird das Ventilabsperrelement 342 mit dem in der Steuerkammer 348 herrschenden Druck p₂ beaufschlagt. Rückseite 342f und Vorderseite 342e weisen im wesentlichen die gleichen Beaufschlagungsflächen auf. Die Tellerfeder 344 ist mit ihrem äußeren Umfangsrand zwischen einem Stützglied 364 und einem ringscheibenförmigen Zwischenglied 376 eingespannt, welches auf dem Ventilsitzkörper 340 aufliegt. Bei vom Ventilsitz 340b abgehobenem Ventilabsperrelement 342 kann die Dämpfungsflüssigkeit weiter durch Durchgänge 358 zum Ausgleichsraum 328 fließen.

Eine zentrale Bohrung 374b des Durchflußkörpers 374 endet in derselben Ebene 374d wie ein Kranz von radial äußeren Bohrungen 374c des Durchflußkörpers 374. Die Bohrungen 374c enden in einem im Ventilsitzkörper 340 ausgebildeten Ringraum 380 und bilden mit diesem und mit in den Durchgängen 358 endenden Radialbohrungen 382 einen Steuerkammerabfluß. Die zentrale Bohrung 374b bildet einen Steuerkammerzufluß. Der Steuerkammerzufluß 374b und der Steuerkammerabfluß können zusammen von einem mit dem Magnetanker 352 über ein Verbindungsteil 384a verbundenen Ventilkörper 384 verschlossen werden. In dem Ventilkörper 384 ist eine Drosselbohrung 384b vorgesehen, um stets auch eine Verbindung konstanten Öffnungsquerschitts zwischen dem Zentralkanal 338 und der Steuerkammer 348 bereitzustellen.

Somit werden bei dem in Figur 5 dagestellten nicht erfindungsgemäßen Ausführungsbeispiel wie bei dem Ausführungsbeispiel gemäß Figur 4 die Querschnitte von Steuerkammerzufluß und Steuerkammerabfluß entsprechend der Stellung des Magnetankers 352 gleichzeitig vergrößert bzw. gleichzeitig verkleinert. Da die Bohrungen 374c zusammen eine größere Querschnittsfläche aufweisen als die Bohrung 374b des Durchflußkörpers 374, ist auch bei diesem Ausführungsbeispiel gewährleistet, daß gemäß Figur 13 sich die Verbindungspunkte der parabolisch verlaufenden ersten Kennlinienabschnitte zu den linear verlaufenden zweiten Kennlinienabschnitten mit zunehmendem Steuerkammerabfluß- und Steuerkammerzuflußquerschnitt zu höheren Gesamtdurchflußraten Q und niedrigeren Druckdifferenzen p₁-p₀ hin verschieben.

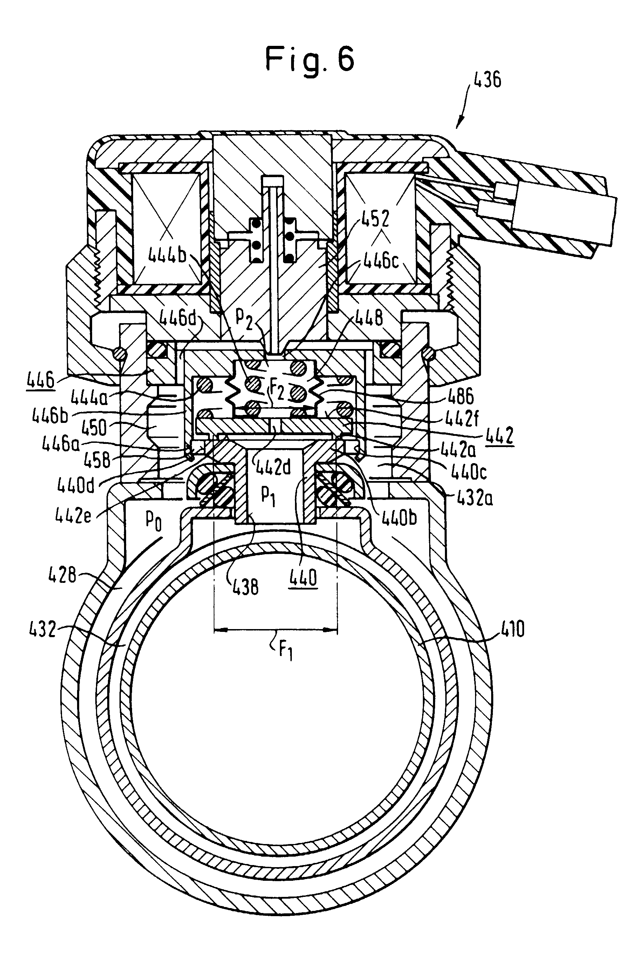

Ein weiteres Ausführungsbeispiel einer Absperrventilbaugruppe ist in Figur 6 dargestellt. Im folgenden wird dieses Ausführungsbeispiel nur insoweit beschrieben als es sich von den vorstehend beschriebenen Ausführungsbeispielen unterscheidet, wobei analoge Teile mit gleichen Bezugszeichen versehen sind wie in Figur 2, jedoch vermehrt um die Zahl 400.

In der Absperrventilbaugruppe 436 ruht das Ventilabsperrelement 442 mit einem Ringflansch 442a auf dem Ventilsitzkörper 440 und ist von zwei Druckfedern 444a und 444b gegen den Ventilsitz 440b vorgespannt. Auf der Vorderseite 442e des Ventilabsperrelements 442 wird eine Fläche F₁ von dem im Zentralkanal 438 herrschenden Druck p₁ beaufschlagt. Der Ventilsitzkörper 440 greift mit seinem äußeren Umfangsrand 440c in Ausnehmungen 446a ein, welche in der Seitenwand 446b des Zwischenkörpers 446 vorgesehen sind, und haltert somit den Zwischenkörper 446.

Der Zentralkanal 438 ist über eine Drosselbohrung 442d im Ventilabsperrelement 442 mit einer Steuerkammer 448 verbunden. Diese Steuerkammer 448 ist zwischen dem Ventilabsperrelement 442 und dem Zwischenkörper 446 angeordnet und von einem druckfest ausgebildeten Metallbalg 486 begrenzt, welcher einenends auf der Rückseite 442f des Ventilabsperrelements 442 und andernends am Zwischenkörper 446 befestigt ist. Das Ventilabsperrelement 442 bietet dem in der Steuerkammer 448 herrschenden Druck p₂ an seiner Rückseite 442f eine Beaufschlagungsfläche F₂ dar. Die Fläche F₂ ist in dem in Figur 6 dargestellten Ausführungsbeispiel kleiner als die vom Druck p₂ im Zentralkanal 438 beaufschlagte Fläche F₁. Darüberhinaus wird das Ventilabsperrelement 442 auf seiner Rückseite 442f auch von dem im Ausgleichsraum 428 herrschenden Druck p₀ beaufschlagt. Die hieraus resultierende hydraulische Kraft auf das Ventilabsperrelement 442 kann jedoch bei der weiteren Diskussion gegenüber der vom Druck p₂ auf das Ventilabsperrelement 442 ausgeübten Kraft vernachlässigt werden.

Der Hauptstrompfad führt bei geöffenetem Absperrventil 442,440b zwischen dem Ventilabsperrelement 442 und dem Ventilsitz 440b hindurch, durch Durchgänge 458, welche von der Seitenwand 446a des Zwischenkörpers 446 und Ausnehmungen 440d im Ventilsitzkörper 440 festgelegt sind, zum Ausgleichsraum 428. Der Nebenstrompfad führt vom Zentralkanal 438 durch die Drosselbohrung 442d in die Steuerkammer 448, weiter durch die vom Magnetanker 452 absperrbare Steuerkammerabflußbohrung 446c, hinter dem Zwischenkörper 446 vorbei, durch im Zwischenkörper 446 vorgesehene Bohrungen 446d und durch den Kanal 450 zum Ausgleichsraum 428.

Im folgenden soll anhand der Figuren 6 und 13 der Verlauf der Schwingungsdämpfer-Kennlinien bei dem in Figur 6 dargestellten Ausführungsbeispiel mit verschieden großen Druckbeaufschlagungsflächen F₁ und F₂ des Ventilabsperrelements 442 erläutert werden.

Da die vom Druck p₁ im Zentralkanal 438 beaufschlagte Fläche F₁ und die vom Druck p₂ in der Steuerkammer 448 beaufschlagte Fläche F₂ nicht gleich groß sind, ist die auf das Ventilabsperrelement 442 wirkende hydraulische Kraft nicht mehr nur von der Druckdifferenz p₁-p₂, sondern auch vom Absolutwert des Drucks p₁ abhängig. Da die Fläche F₁ größer ist als die Fläche F₂, übt der Druck p₁ auf die Differenzfläche F₁-F₂ eine in Richtung auf die Öffnung des Hauptstromventils 442,440b hin gerichtete Kraft auf das Ventilabsperrelement 442 aus. Während eines Dämpferhubs ändert sich der im Zentralkanal 438 herrschende Druck p₁ weitaus mehr als der im Ausgleichsraum 428 herrschende Druck p₀. Eine Änderung der Gesamtdruckdifferenz p₁-p₀ ist daher vorwiegend auf eine Änderung des Drucks p₁ zurückzuführen. Aus den vorstehend erläuterten Gründen beginnt daher das Ventilabsperrelement 442 des in Figur 6 dargestellten Ausführungsbeispiels bei umso geringeren Durchflußraten Q vom Ventilsitz 440b abzuheben, je größer die Gesamtdruckdifferenz p₁-p₀ ist (siehe Figur 13).

Anders ausgedrückt: Mit abnehmendem Querschnitt des Steuerkammerabflusses 446c (entsprechend dem Übergang von der Linie L zur Linie M in Figur 13) verschiebt sich der Knickpunkt der jeweiligen Kennlinie zu geringeren Werten der Durchflußrate Q hin und zu größeren Druckdifferenzen p₁-p₀.

Man kann also auch durch unterschiedliche Bemessung der Druckbeaufschlagungsflächen am Ventilabsperrelement die gleiche in höchstem Maße schwingungsdämpfer-gerechte Kennlinienschar erreichen, wie sie in den Ausführungsbeispielen gemäß Figuren 4 und 5 durch Steuerung der Querschnitte von Steuerkammerabfluß und Steuerkammerzufluß erzielt wurde. Es soll festgestellt werden, daß eine derartige Kennlinienschar auch durch die Kombination von unterschiedlich großen Beaufschlagungsflächen F₁ und F₂ mit gesteuerten Steuerkammerzuflüssen und Steuerkammerabflüssen erzielt werden kann.

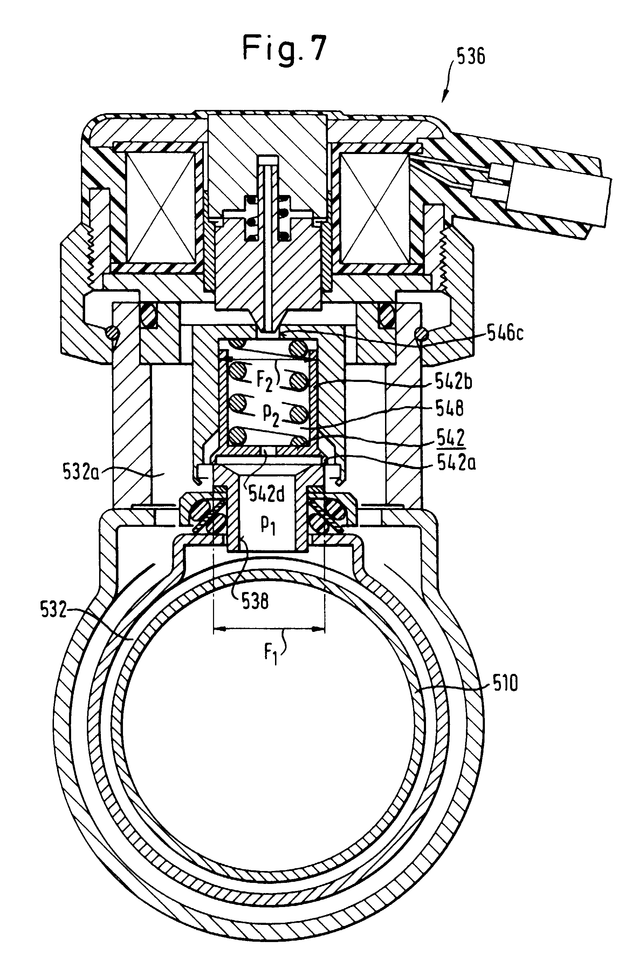

In Figur 7 ist ein weiteres Ausführungsbeispiel einer Absperrventilbaugruppe dargestellt. Im folgenden wird dieses Ausführungsbeispiel nur insoweit beschrieben als es sich von den vorstehend beschriebenen Ausführungsbeispielen unterscheidet, wobei analoge Teile mit gleichen Bezugszeichen versehen sind wie in Figur 2, jedoch vermehrt um die Zahl 500.

Das in Figur 7 dargestellte Ausführungsbeispiel entspricht im wesentlichen dem in Figur 2 dargestellten Ausführungsbeispiel. Lediglich der Ringflansch 542a des Ventilabsperrelements 542 weist einen größeren Durchmesser auf als der Ringflansch 42a des Ventilabsperrelements 42 in Figur 2. Der Durchmesser des Ringflansches 542a ist darüberhinaus auch größer als der Außendurchmesser des Rohransatzes 542b, so daß auch bei dem Ausführungsbeispiel gemäß Figur 7 die vom Druck p₁ im Zentralkanal 538 beaufschlagte Fläche F₁ des Ventilabsperrelement 542 größer ist als die vom Druck p₂ in der Steuerkammer 548 beaufschlagte Fläche F₂ und sich eine gemäß Figur 13 verlaufende Kennlinienschar ergibt aus analogen Gründen wie im Zusammenhang mit Figur 6 beschrieben.

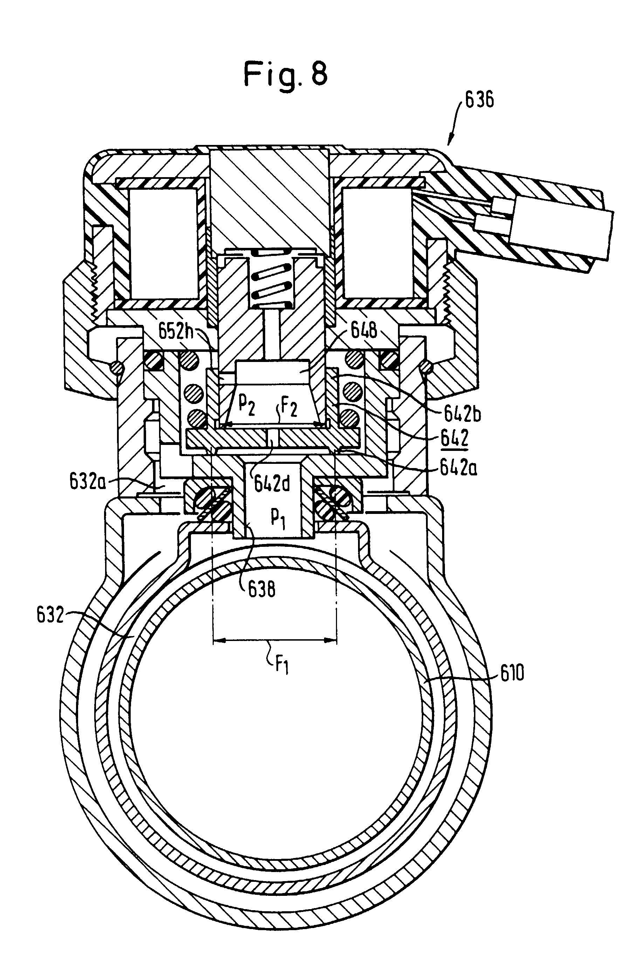

Ein weiteres Ausführungsbeispiel einer Absperrventilbaugruppe ist in Figur 8 dargestellt. Im folgenden wird dieses Ausführungsbeispiel nur insoweit beschrieben als es sich von den vorstehend beschriebenen Ausführungsbeispielen unterscheidet, wobei analoge Teile mit gleichen Bezugszeichen versehen sind wie in Figur 2, jedoch vermehrt um die Zahl 600.

Das in Figur 8 dargestellte Ausführungsbeispiel entspricht im wesentlichen dem in Figur 3 dargestellten Ausführungsbeispiel. Der Ringflansch 642a des Ventilabsperrelements 642 weist jedoch einen größeren Durchmesser auf als der Ringflansch 142a des Ventilabsperrelements 142 in Figur 3. Somit ist auch bei diesem Ausführungsbeispiel die vom Druck p₁ im Zentralkanal 638 beaufschlagte Fläche F₁ des Ventilabsperrelement 642 größer als die vom Druck p₂ in der Steuerkammer 648 beaufschlagte Fläche F₂. Folglich kann auch mit diesem Ausführungsbeispiel eine gemäß Figur 13 verlaufende Kennlinienschar erzielt werden aus analogen Gründen wie im Zusammenhang mit Figur 6 erläutert wurde.

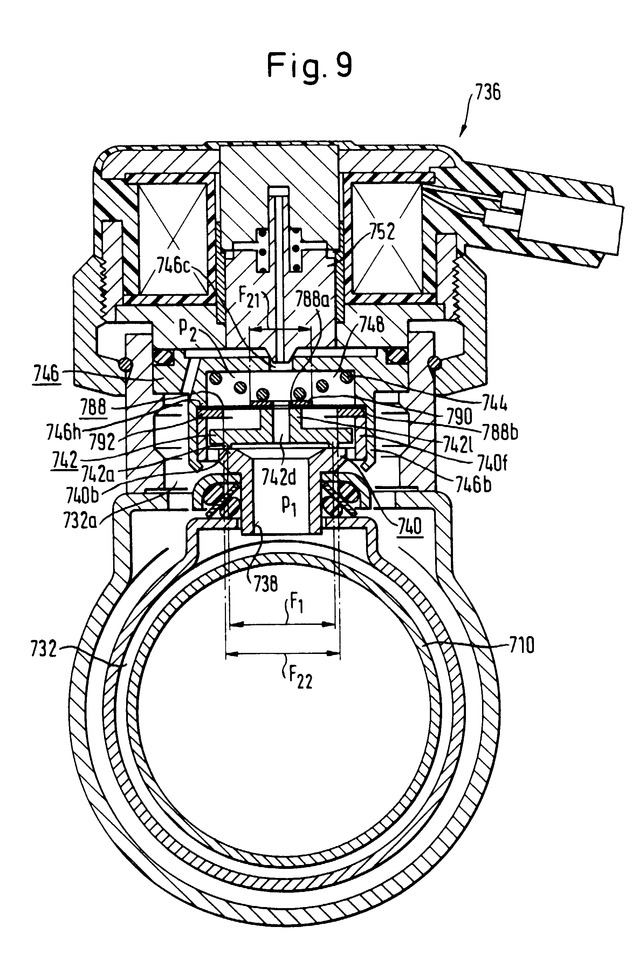

Ein weiteres Ausführungsbeispiel ist in Figur 9 dargestellt. Im folgenden wird dieses Ausführungsbeispiel nur insoweit beschrieben als es sich von den vorstehend beschriebenen Ausführungsbeispielen unterscheidet, wobei analoge Teile mit gleichen Bezugszeichen versehen sind wie in Figur 2, jedoch vermehrt um die Zahl 700.

Der Ventilsitzkörper 740 ist in diesem Ausführungsbeispiel topfförmig ausgebildet mit einem sich nach oben erstreckenden Rohransatz 740f. Der Rohransatz 740f wird von der Seitenwand 746b des Zwischenkörpers 746 dichtend umgriffen. Das Ventilabsperrelement 742 sitzt mit einem Ringflansch 742a auf dem Ventilsitz 740b auf. Eine aus einem elastischen Material gebildete Membran 788 ist mit ihrem inneren Umfangsrand 788a zwischen einen vom Absperrventilkörper 742 nach oben abstehenden Rohrstutzen 742l und eine Ringscheibe 790 eingespannt und mit ihrem äußeren Umfangsrand 788b zwischen eine Schulter 746h des Zwischenkörpers 746 und ein ringscheibenförmig ausgebildeten Zwischenglied 792 eingespannt, welches auf dem Rohransatz 740f aufliegt. Eine Spiraldruckfeder 744 spannt das Ventilabsperrelement 742 gegen den Ventilsitz 740b vor.

Die Steuerkammer 748 wird von dem Zwischenkörper 746, der Membran 788 und der Ringscheibe 790 begrenzt. Der im Zentralkanal 738 herrschende Druck p₁ beaufschlagt eine Fläche F₁ des Ventilabsperrelements 742. Der in der Steuerkammer 748 herrschende Druck p₂ beaufschlagt eine Fläche F₂₁ der Ringscheibe 790 sowie eine Fläche F₂₂-F₂₁ der Membran 788. Zwar ist die Gesamtbeaufschlagungsfläche F₂₂ für den Druck p₂ größer als die Beaufschlagungsfläche F₁ für den Druck p₁, jedoch kann die Membran 788 aufgrund ihrer Elastizität und ihrer Unterstützung durch das Stützglied 792 nicht die ihrer Fläche F₂₂-F₂₁ entsprechende hydraulische Kraft auf das Ventilabsperrelement 742 übertragen. Die Fläche F₂₂-F₂₁ ist so bemessen, daß in dem in Figur 9 dargestellten Ausführungsbeispiel die von dem im Zentralkanal 738 herrschenden Druck p₁ auf das Ventilabsperrelement 742 ausgeübte hydraulische Kraft selbst dann größer ist als die von dem in der Steuerkammer 748 herrschenden Druck p₂ auf das Ventilabsperrelement 742 ausgeübte hydraulische Kraft, wenn der Steuerkammerabfluß 746c vom Magnetanker 752 verschlossen ist, d.h. wenn der Druck p₁ im Zentralkanal 738 und der Druck p₂ in der Steuerkammer 748 den gleichen Wert aufweisen. Somit kann auch mit diesem Ausführungsbeispiel einer Absperrventilbaugruppe 736 eine Kennlinienschar gemäß Figur 13 erzielt werden aus analogen Gründen wie im Zusammenhang mit Figur 6 beschrieben.

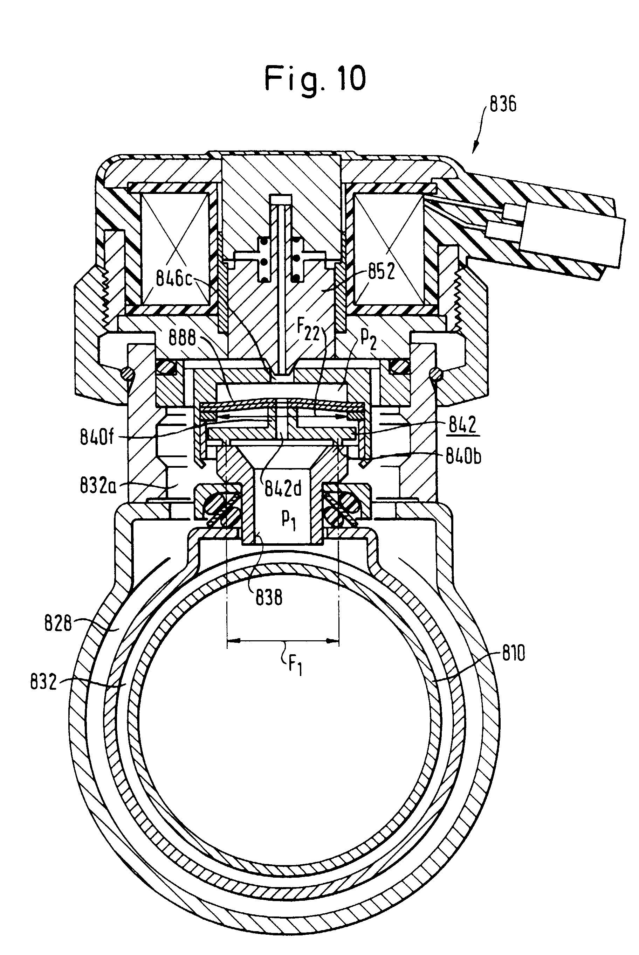

Bei dem in Figur 10 dargestellten Ausführungsbeispiel einer Absperrventilbaugruppe 836 ist die Membran 888 von Tellerfedern gebildet, welche das Ventilabsperrelement 842 gegen den Ventilsitz 840b vorspannen. Es muß in diesem Ausführungsbeispiel daher keine gesonderte Vorspannfeder für das Ventilabsperrelement 842 vorgesehen werden. Auch kann auf den gesonderten Einsatz einer Ringscheibe entsprechend der Ringscheibe 790 verzichtet werden, da die Membran 888 durch die eigene Vorspannung auf dem Rohransatz 840f des Ventilabsperrelements 842 gehalten wird. Für die auf das Ventilabsperrelement 842 ausgeübten hydraulischen Kräfte gelten die gleichen Überlegungen wie sie vorstehend bei der Erläuterung von Figur 9 angestellt wurden: Die von dem im Zentralkanal 838 herrschenden Druck p₁ auf das Ventilabsperrelement 842 ausgeübte hydraulische Kraft ist selbst dann größer als die von dem in der Steuerkammer 848 herrschenden Druck p₂ auf das Ventilabsperrelement 842 ausgeübte hydraulische Kraft, wenn der Steuerkammerabfluß 846c vom Magnetanker 852 verschlossen ist, d.h. wenn der Druck p₁ im Zentralkanal 838 und der Druck p₂ in der Steuerkammer 848 den gleichen Wert aufweisen. Somit kann auch mit diesem Ausführungsbeispiel einer Absperrventilbaugruppe 836 eine Kennlinienschar gemäß Figur 13 erzielt werden aus analogen Gründen wie im Zusammenhang mit Figur 6 beschrieben.

Erfindungsgemäß wurde ein Schwingungsdämpfer vorgeschlagen, welcher eine hervorragende Anpassung des Dämpfungsverlaufs an die Fahrzeugschwingungen ohne zusätzliche Regelungseingriffe während des Dämpferhubs ermöglicht. Zur Erzielung der gewünschten Dämpfungscharakteristik des Schwingungsdämpfers muß nicht mehr zwischen einzelnen Abschnitten verschiedener Kennlinien der Kennlinienschar hin- und her geregelt werden, sondern es ist ausreichend, eine einzelne Kennlinie der Kennlinienschar auszuwählen.

Das die Nebenstromdurchflußrate festlegende Vorsteuerventil eines Pkw-Schwingungsdämpfers ist derart ausgebildet, daß bei einer Gesamtdruckdifferenz von 10 bar zwischen dem in der Hochdruckteilstrecke herrschenden Druck und dem in der Niederdruckteilstrecke herrschenden Druck eine Durchflußrate von 10 l/min durchlassen kann. Hierzu beträgt der maximale Öffnungsquerschnitt des Steuerkammerzuflusses bzw. des Steuerkammerabflusses bei einem Pkw-Schwingungsdämpfer mindestens 3 mm².

Eine besonders schwingungsdämpfer-gerechte Kennlinienschar kann dadurch bereitgestellt werden, daß sich die den parabolisch verlaufenden ersten Kennlinienabschnitt und den linear verlaufenden zweiten Kennlinienabschnitt verbindenden Knickpunkte mit größer werdendem Steuerkammerabflußquerschnitt von hohem Druck und niedriger Durchflußrate, bspw. 80 bar und 1 l/min, zu niedrigem Druck und hoher Durchflußrate, bspw. 5 bar und 10 l/min, verschieben. Zur Erzielung einer derartigen Kennlinienschar können einerseits bei gleichen Beaufschlagungsflächen des Ventilabsperrelements für den im Zentralkanal herrschenden Druck und den in der Steuerkammer herrschenden Druck sowohl der Steuerkammerabfluß als auch der Steuerkammerzufluß einen veränderbaren Öffnungsquerschnitt aufweisen oder andererseits bei konstantem Öffnungsquerschnitt des Steuerkammerzuflusses die Beaufschlagungsfläche, auf welche der im Zentralkanal herrschende Druck einwirkt, größer ausgebildet ist als die Beaufschlagungsfläche, auf welche der in der Steuerkammer herrschende Druck einwirkt.

## Patentansprüche

1. Schwingungsdämpfer, umfassend
- einen Zylinder (10;410;510;610;710;810) mit einer Achse,
- eine durch mindestens ein Zylinderende in axialer Richtung beweglich hindurchgeführte Kolbenstange (12),
- einen innerhalb des Zylinders (10;410;510;610;710;810) mit der Kolbenstange (12) verbundenen Kolben (18),
- eine Mehrzahl von Fluidenkammern (30a,30b,28) mit in Abhängigkeit von der Bewegung der Kolbenstange (12) relativ zum Zylinder (10;410;510;610;710;810) relativ zueinander veränderlichem Fassungsvermögen und Fluidenverbindungen (20 zwischen 30a und 30b;34,32,36 zwischen 30b und 28; 24 zwischen 30a und 28) zwischen mindestens zwei der Fluidenkammern (30a,30b,28),
wobei mindestens eine der Fluidenverbindungen (20 zwischen 30a und 30b;34,32,36 zwischen 30b und 28; 24 zwischen 30a und 28) eine Ventilbaugruppe (36;436;536;636;736;836) zwischen zwei Teilstrecken (432;532;632;732;832 und 432a;532a;632a;732a;832a) dieser Fluidenverbindung aufweist,
wobei weiter die Ventilbaugruppe (36;436;536;636;736;836) mit mindestens einem Ventilsitz (440b;740b;840b) ausgeführt ist, an welchen die erste Teilstrecke (432;532;632;732;832) anschließt,
wobei weiter eine erste Seite (442e) eines Hauptstromventilelements (442;542;642;742;842) gegen den Ventilsitz (440b;740b;840b) in eine Ventilsitzanlagestellung elastisch andrückbar ist,
wobei weiter eine von der ersten Seite (442e) des Hauptstromventilelements (442;542;642;742;842) abgelegene zweite Seite (442f) des Hauptstromventilelements (442;542;642;742;842) an eine Steurkammer (448;548;648;748) angrenzend von dem Fluidendruck (p₂) in dieser Steuerkammer (448;548;648;748) beaufschlagbar ist,
wobei weiter eine die Steuerkammer (448;548;648;748) mit der ersten Teilstrecke (432;532;632;732;832) verbindende Drosselstrecke (442d;542d;642d;742d;842d) vorgesehen ist, welche einen konstanten Querschnitt aufweist,
wobei weiter die Steuerkammer (448;548;648;748) über einen Steuerkammerabfluß (446c;546c;652h;746c;846c) mit der zweiten Teilstrecke (432a;532a;632a;732a;832a) in Verbindung steht,
wobei weiter diesem Steuerkammerabfluß (446c;546c;652h;746c;846c) eine Abflußquerschnittsbemessungseinrichnung (452;552;752;852) zugeordnet ist und
wobei die Abflußquerschnittsbemessungseinrichtung (452;552;752;852) in eine Mehrzahl von Stellungen einstellbar ist, die jeweils verschiedene Abflußquerschnitte des Steuerkammerabflusses (446c;546c;652h;746c;846c) bedingen,
**dadurch gekennzeichnet,** daß bei Relativbewegung von Zylinder (10;410;510;610;710;810) und Kolben (18), geschlossenem Steuerkammerabfluß (446c;546c;652h;746c;846c) und sich in der Ventilsitzanlagestellung befindendem Hauptstromventilelement (442;542;642;742;842) eine von dem in der ersten Teilstrecke (432;532;632;732;832) herrschenden Druck (p₁) auf das Hauptstromventil element (442;542;642;742; 842) ausgeübte Hydraulikkraft größer ist als eine von dem in der Steuerkammer (448;548;648;748) herrschenden Druck (p₂) auf das Hauptstromventilelement (442;542; 642;742;842) ausgeübte Hydraulikkraft,
so daß das Hauptstromventilelement (442;542;642;742; 842) mit abnehmendem Steuerkammerabflußquerschnitt bei kleiner werdenden Durchflußraten durch den Steuerkammerabfluß (446c;546c;652h;746c;846c) und zunehmenden Druckdifferenzen (p₁-p₀) zwischen dem in der ersten Teilstrecke (432;532;632;732;832) herrschenden Druck (p₁) und dem in der zweiten Teilstrecke (432a;532a;632a;732a; 832a) herrschenden Druck (p₀) von dem Ventilsitz abzuheben beginnt. (Figur 13)

2. Schwingungsdämpfer, umfassend
- einen Zylinder (10;210) mit einer Achse,
- eine durch mindestens ein Zylinderende in axialer Richtung beweglich hindurchgeführte Kolbenstange (12),
- einen innerhalb des Zylinders (10;210) mit der Kolbenstange (12) verbundenen Kolben (18),
- eine Mehrzahl von Fluidenkammern (30a,30b,28) mit in Abhängigkeit von der Bewegung der Kolbenstange (12) relativ zum Zylinder (10;210) relativ zueinander veränderlichem Fassungsvermögen und Fluidenverbindungen (20 zwischen 30a und 30b;34,32,36 zwischen 30b und 28, 24 zwischen 30a und 28) zwischen mindestens zwei der Fluidenkammern (30a,30b,28),
wobei mindestens eine der Fluidenverbindungen (20 zwischen 30a und 30b;34,32,36 zwischen 30b und 28, 24 zwischen 30a und 28) eine Ventilbaugruppe (36;236) zwischen zwei Teilstrecken (232;232a) dieser Fluidverbindung aufweist,
wobei weiter die Ventilbaugruppe (36;236) mit mindestens einem Ventilsitz ausgeführt ist, an welchen die erste Teilstrecke (232) anschließt,
wobei weiter eine erste Seite (242e) eines Hauptstromventilelements (242) gegen den Ventilsitz in eine Ventilsitzanlagestellung elastisch andrückbar ist,
wobei weiter eine von der ersten Seite (242e) des Hauptstromventilelements (242) abgelegene zweite Seite (242f) des Hauptstromventilelements (242) an eine Steuerkammer (248) angrenzend von dem Fluidendruck (p₂) in dieser Steuerkammer (248) beaufschlagbar ist,
wobei weiter eine die Steuerkammer (248) mit der ersten Teilstrecke (232) verbindende Drosselstrecke (242d,242d1) vorgesehen ist,
wobei weiter die Steuerkammer (248) über einen Steuerkammerabfluß (252h) mit der zweiten Teilstrecke (232a) in Verbindung steht,
wobei weiter diesem Steuerkammerabfluß (252h) eine Abflußquerschnittsbemessungseinrichzung (252) zugeordnet ist und
wobei die Abflußquerschnittsbemessungseinrichtung (252) in eine Mehrzahl von Stellungen einstellbar ist, die jeweils verschiedene Abflußquerschnitte des Steuerkammerabflusses (252h) bedingen,
**dadurch gekennzeichnet**, daß bei Relativbewegung von Zylinder (10;210) und Kolben (18), geschlossenem Steuerkammerabfluß (252h) und sich in der Ventilsitzanlagestellung befindendem Hauptstromventilelement (242) eine von dem in der ersten Teilstrecke (232) herrschenden Druck (p₁) auf das Hauptstromventilelement (242) ausgeübte Hydraulikkraft im wesentlichen gleich einer von dem in der Steuerkammer (248) herrschenden Druck (p₂) auf das Hauptstromventilelement (242) ausgeübten Hydraulikkraft ist und daß der Querschnitt der Drosselstrecke (242d,242d1) mit zunehmendem Steuerkammerabflußquerschnitt ebenfalls zunimmt,
so daß das Hauptstromventilelement (242) mit abnehmendem Steuerkammerabflußquerschnitt bei kleiner werdenden Durchflußraten durch den Steuerkammerabfluß (252h) und zunehmenden Druckdifferenzen (p₁-p₀) zwischen dem in der ersten Teilstrecke (232) herrschenden Druck (p₁) und dem in der zweiten Teilstrecke (232a) herrschenden Druck (p₀) von dem Ventilsitz abzuheben beginnt. (Figur 13)

3. Schwingungsdämpfer nach Anspruch 2,
**dadurch gekennzeichnet**, daß der Querschnitt der Drosselstrecke (242d/242d1) langsamer zunimmt als der Steuerkammerabflußquerschnitt.

4. Schwingungsdämpfer, umfassend
- einen Zylinder (10;110) mit einer Achse,
- eine durch mindestens ein Zylinderende in axialer Richtung beweglich hindurchgeführte Kolbenstange (12),
- einen innerhalb des Zylinders (10;110) mit der Kolbenstange (12) verbundenen Kolben (18),
- eine Mehrzahl von Fluidenkammern (30a,30b,28) mit in Abhängigkeit von der Bewegung der Kolbenstange (12) relativ zum Zylinder (10;110) relativ zueinander veränderlichem Fassungsvermögen und Fluidenverbindungen (20 zwischen 30a und 30b,34,32,38, 58, 32a zwischen 30b und 28, 24 zwischen 30a und 28) zwischen mindestens zwei der Fluidenkammern (30a,30b,28),
wobei mindestens eine der Fluidenverbindungen (20 zwischen 30a und 30b,34,32,38,58, 32a zwischen 30b und 28, 24 zwischen 30a und 28) eine Ventilbaugruppe (36;136) zwischen zwei Teilstrecken (32;132 und 32a;132a) dieser Fluidenverbindung aufweist,
wobei weiter die Ventilbaugruppe (36;136) mit mindestens einem Ventilsitz (40b;140b) ausgeführt ist, an welchen die erste Teilstrecke (32;132) anschließt,
wobei weiter eine erste Seite (42e;142e) eines Hauptstromventilelements (42;142) gegen den Ventilsitz (40b;142b) in eine Ventilsitzanlagestellung elastisch andrückbar ist,
wobei weiter eine von der ersten Seite (42e;142e) des Hauptstromventilelements (42;142) abgelegene zweite Seite (42f;142f) des Hauptstromventilelements (42;142) an eine Steuerkammer (48;148) angrenzend von dem Fluidendruck (p₂) in dieser Steuerkammer (48;148) beaufschlagbar ist,
wobei weiter eine die Steuerkammer (48;148) mit der ersten Teilstrecke (32;132) verbindende Drosselstrecke (42d;142d) vorgesehen ist, welche einen konstanten Querschnitt aufweist,
wobei weiter die Steuerkammer (48;148) über einen Steuerkammerabfluß (46c;152h) mit der zweiten Teilstrecke (32a;132a) in Verbindung steht,
wobei weiter diesem Steuerkammerabfluß (46c;152h) eine Abflußquerschnittsbemessungseinrichtung (52;152) zugeordnet ist,
wobei die Abflußquerschnittsbemessungseinrichtung (52;152) in eine Mehrzahl von Stellungen einstellbar ist, die jeweils verschiedene Abflußquerschnitte des Steuerkammerabflusses (46c;152h) bedingen, und
wobei ein von der Steuerkammer (48;148) zu der zweiten Teilstrecke (32a;132a) hin bei einer vorbestimmten Druckdifferenz Δpₖ öffnendes Überdruckventil (60/46e; 152/142i) vorgesehen ist,
**dadurch gekennzeichnet,** daß bei Relativbewegung von Zylinder (10;110) und Kolben (18), geschlossenem Steuerkammerabfluß (46c;152h) und sich in der Ventilsitzanlagestellung befindendem Hauptstromventilelement (42;142) eine von dem in der ersten Teilstrecke (32;132) herrschenden Druck (p₁) auf das Hauptstromventilelement (42;142) ausgeübte Hydraulikkraft im wesentlichen gleich einer von dem in der Steuerkammer (48;148) herrschenden Druck (p₂) auf das Hauptstromventilelement (42;142) ausgeübten Hydraulikkraft ist,
so daß das Hauptstromventilelement (42;142) unabhängig vom Querschnitt des Steuerkammerabflusses (46c;152h) oberhalb eines Grenzwerts des Steuerkammerabflußquerschnitts stets bei der gleichen Durchflußrate (Qₖ) durch den Steuerkammerabfluß (46c;152h) vom Ventilsitz (40b; 140b) abzuheben beginnt, wobei das Abheben mit abnehmendem Steuerkammerabflußquerschnitt bei steigender Druckdifferenz (p₁-p₀) zwischen dem in der ersten Teilstrecke (32;132) herrschenden Druck (p₁) und dem in der zweiten Teilstrecke (32a;132a) herrschenden Druck (p₀) stattfindet, und wobei das Hauptstromventilelement (42;142) unterhalb des Grenzwerts des Steuerkammerabflußquerschnitts bei weiter abnehmendem Steuerkammerabflußquerschnitt unabhängig von der Durchflußrate (Q) durch den Steuerkammerabfluß (46c;152h) bei konstant bleibender, vorbestimmter Druckdifferenz Δpₖ zwischen dem in der ersten Teilstrecke (32;132) herrschenden Druck (p₁) und dem in der zweiten Teilstrecke (32a;132a) herrschenden Druck (p₀) von dem Ventilsitz (40b;140b) abzuheben beginnt. (Figur 11)

5. Schwingungsdämpfer nach Anspruch 4,
**dadurch gekennzeichnet,** daß das Hauptstromventilelement (42;142) in aer Ventilsitzanlagestellung auf seinen beiden Seiten (42e,42f;142e,142f) im wesentlichen gleiche Beaufschlagungsflächen (F₁, F₂) für den in der ersten Teilstrecke (32;132) herrschenden Druck (p₁) und den in der Steuerkammer (48;148) herrschenden Druck (p₂) aufweist.

6. Schwingungsdämpfer nach einem der Ansprüche 1 bis 5,
**dadurch gekennzeichnet,** daß die Ventilbaugruppe (36) am Zylinder (10) angeordnet ist.

7. Schwingungsdämpfer nach einem der Ansprüche 1 bis 6,
**dadurch gekennzeichnet,** daß im Falle eines Zwei-Rohr-Schwingungsdämpfers mit zwei durch den Kolben (18) voneinander getrennten und durch ein Kolbenventil (20) miteinander verbindbaren Fluidenkammern (30a,30b) und einem durch ein Bodenventil (24) mit einer bodennahen Fluidenkammer (30a) verbindbaren Ausgleichsraum (28) die die Ventilbaugruppe (36) enthaltende Fluidenverbindung (32a) von der bodenfernen Fluidenkammer (30b) zum Ausgleichsraum (28) verläuft.

## Claims

1. A vibration damper comprising
- a cylinder (10;410;510;610;710;810) with an axis,
- a piston rod (12) passing movably in an axial direction through at least one cylinder end,
- a piston (18) being connected inside the cylinder (10) to the piston rod (12),
- a plurality of fluid chambers (30a,30b,28) variable in capacity in relation to one another as a function of the movement of the piston rod (12) relative to the cylinder (10;410;510;610;710;810) and fluid connections (20 between 30a and 30b; 34,32,36 between 30b and 28; 24 between 30a and 28) between at least two of the fluid chambers (30a,30b,28)
wherein at least one of the fluid connections (20 between 30a and 30b; 34,32,36 between 30b and 28; 24 between 30a and 28) comprises a valve assembly (36;436;536;636;736;836) between two sections (432;532;632;732;832) and (432a;532a;632a;732a;832a) of this fluid connection,
and wherein furthermore the valve assembly (36;436;536;636;736;836) is constructed with at least one valve seat (440b;740b;840b) adjacent to which there is a first section (432;532;632;732;832),
and wherein further a first side (442e) of a main flow valve element (442;542;642;742;842) can be pressed resiliently against the valve seat (440b;740b;840b) into a shut-off position,
and wherein further a second side (442f) of the main flow valve element (442;542;642;742;842) remote from the first side (442;542;642;742;842) adjacent a control chamber (448;548;648;748) can be subjected to the action of the fluid pressure (p₂) in this control chamber (448;548;648;748),
and wherein further a throttle section (442d;542d;642d;742d;842d) which has a constant cross-section is provided and connects the control chamber (448;548;648;748) to the first section (432;532;632;732;832) and wherein furthermore the control chamber (448;548;648;748) communicates with the second section (432a;532a;632a;732a;832a) via a control chamber outlet (446c;546c;652h;746c;846c)
and wherein an outlet cross-section dimensioning means (452;552;752;852) is associated with this control chamber outlet (446c;546c;652h;746c;846c)
and wherein the outlet cross-section dimensioning means (452;552;752;852) is adjustable to a plurality of positions which respectively condition various outlet cross-sections of the control chamber outlet (446c;546c;652h;746c;846c),
characterised in that upon relative movement of cylinder (10;410;510;610;710;810) and piston (18), with the control chamber outlet (446c;546c;652h;746c;846c) closed and the main flow valve element (442;542;642;742;842) being in the valve shut-off position, a hydraulic force exerted on the main flow valve element (442;542;642;742;842) by the pressure (p₁) prevailing in the first section (432;532;632;732;832) is greater than a hydraulic force exerted on the main flow valve (442;542;642;742;842) by the pressure (p₂) prevailing in the control chamber (448;548;648;748),
so that the main flow valve element (442;542;642;742;842), with diminishing control chamber outlet cross-section for diminishing through-flow rates through the control chamber outlet (446c;546c;652h;746c;846c)and increase in pressure differences (p₁-p₀) between the pressure (p₁) prevailing in the first section (432;532;632;732;832) and the pressure (p₀) prevailing in the second section (432a;532a;632a;732a;832a) starts to lift off the valve seat (Fig. 13).

2. A vibration damper comprising
- a cylinder (10;210) with an axis
- a piston rod (12) passing movably in an axial direction through at least one cylinder end,
- a piston (18) being connected inside the cylinder (10;210) to the piston rod (12),
- a plurality of fluid chambers (30a,30b,28) variable in capacity in relation to one another as a function of the movement of the piston rod (12) relative to the cylinder (10;210) and fluid connections (20 between 30a and 30b; 34,32,36 between 30b and 28; 24 between 30a and 28) between at least two of the fluid chambers (30a,30b,28)
wherein at least one of the fluid connections (20 between 30a and 30b; 34,32,36 between 30b and 28; 24 between 30a and 28) comprises a valve assembly (36;236) between two sections (232'232a) of this fluid connection,
and wherein furthermore the valve assembly (36;236) is constructed with at least one valve seat adjacent to which there is the first section (232),
and wherein further a first side (242e) of a main flow valve element (242) can be pressed resiliently against the valve seat into a shut-off position,
and wherein further a second side (242f) of the main flow valve element (242) remote from the first side (242c) adjacent a control chamber (248) can be subjected to the action of the fluid pressure (p₂) in this control chamber (248),
and wherein further a throttle section (242d;242d1) is provided which connects the control chamber (248) to the first section (232)
and whereby further the control chamber (248) communicates with the second section (232a) via a control chamber outlet (252h)
and wherein further an outlet cross-section dimensioning means (252) is associated with this control chamber outlet (252h)
and wherein the outlet cross-section dimensioning means (252) is adjustable to a plurality of positions which respectively condition various outlet cross-sections of the control chamber outlet (252h),
characterised in that upon relative movement of cylinder (10;210) and piston (18), with the control chamber outlet (252h) closed, a hydraulic force exerted on the main flow valve element (242) by the pressure (p₁) prevailing in the first section (232) is substantially equal to a hydraulic force exerted on the main flow valve element by the pressure (p₂) prevailing in the control chamber (248),
and in that the cross-section of the throttle section (242d;242i) likewise increases with increasing control chamber outlet cross-section so that the main flow valve element (242), with diminishing control chamber outlet cross-section for diminishing through-flow rates through the control chamber outlet (252h) and increase in pressure differences (p₁-p₀) between the pressure (p₁) prevailing in the first section (232) and the pressure (p₀) prevailing in the second section (232a), starts to lift off the valve seat (Fig. 13).

3. A vibration damper according to Claim 2, characterised in that the cross-section of the throttle section (242d/242d1) increases more slowly than the control chamber outlet cross-section.

4. A vibration damper comprising
- a cylinder (10;110) with an axis,
- a piston rod (12) passing movably in an axial direction through at least one cylinder end,
- a piston (18) connected inside the cylinder (10;110) to the piston rod (12),
- a plurality of fluid chambers (30a,30b,28) variable in capacity in relation to one another as a function of the movement of the piston rod (12) relative to the cylinder (10;110) and fluid connections (20 between 30a and 30b; 34,32,38,58,32a between 30b and 28; 24 between 30a and 28) between at least two of the fluid chambers (30a,30b,28)
wherein at least one of the fluid connections (20 between 30a and 30b; 34,32,38,58,32a between 30b and 28; 24 between 30a and 28) comprises a valve assembly (36;136) between two sections (32;132) and (32a;132a) of this fluid connection, and wherein furthermore the valve assembly (36;136) is constructed with at least one valve seat (40b;140b) adjacent to which there is a first section (32;132),
and wherein further a first side (42e;142e) of a main flow valve element (42;142) can be pressed resiliently against the valve seat (40b;140b) into a valve shut-off position, and wherein further a second side (42f;142f) of the main flow valve element (42;142) remote from the first side (42e;142e), adjacent a control chamber (48;148) can be subjected to the action of the fluid pressure (p₂) in this control chamber (48;148),
and wherein further a throttle section (42d;142d) is provided, is of constant cross-section and connects the control chamber (48;148) to the first section (32;132) and wherein furthermore the control chamber (48;148) communicates with the second section (32a;132a) via a control chamber outlet (46c;152h)
and wherein further an outlet cross-section dimensioning means (52;152) is associated with this control chamber outlet (46c;5152h)
and wherein the outlet cross-section dimensioning means (52;152) is adjustable to a plurality of positions which respectively condition various outlet cross-sections of the control chamber outlet (46c;152h),
and wherein a pressure relief valve (60/46e;152;142i) is provided which, from the control chamber (48;148) for the second section (32a;132a) opens at a predetermined pressure difference Δpₖ,
characterised in that upon relative movement of cylinder (10;110) and piston (18), with the control chamber outlet (46c;152h) closed and with the main flow valve element (42;142) in the valve shut-off position, a hydraulic force exerted on the main flow valve element (42;142) by the pressure (p₁) prevailing in the first section (32;132) is substantially equal to a hydraulic force exerted on the main flow valve element (42;142) by the pressure (p₂) prevailing in the control chamber (48;148),
so that regardless of the cross-section of the control chamber outlet (46c;152h) above a limit value of the control chamber outlet cross-section, the main flow valve element (42;142) starts to lift off the valve seat (40b;140b) always at the same through-flow rate (Qₖ) through the control chamber outlet (46c;152h), whereby the lifting off process takes place with diminishing control chamber outlet cross-section with increasing pressure difference (p₁-p₀) between the pressure (p₁) prevailing in the first section (32;132) and the pressure (p₀) prevailing in the second section (32a;132a) and wherein the main flow valve element (42;142) starts to lift off the valve seat (40b;140b) below the limit value of control chamber outlet cross-section with further diminishing control chamber outlet cross-section, regardless of the through-flow rate (Q) through the control chamber outlet (46c;152h) with a constant predetermined pressure difference Δpₖ between the pressure (p₁) prevailing in the first section (32;132) and the pressure (p₀) prevailing the second section (32a;132a).

5. A vibration damper according to Claim 4, characterised in that the main flow valve element (42;142), in the valve shut-off position, has on both sides (42e;42f;142e;142f) substantially the same working surfaces (F₁,F₂) available to the pressure (p₁) prevailing in the first section (32;132) and the pressure (p₂) prevailing in the control chamber (48;148).

6. A vibration damper according to one of Claims 1 to 5, characterised in that the valve assembly (36) is disposed on the cylinder (10).

7. A vibration damper according to one of Claims 1 to 6, characterised in that in the case of a twin-tube vibration damper with two fluid chambers (30a,30b) isolated from each other by the piston (18) and adapted to be connected to each other by a piston valve (20) and with a compensating chamber (28) adapted to be connected by a bottom valve (24) to a fluid chamber (30a) close to the bottom, the fluid connection (32a) containing the valve assembly (36) extends to the compensating chamber (28) from the fluid chamber (30b) which is remote from the bottom.

## Revendications

1. Amortisseur d'oscillations comportant
- un cylindre (10; 410; 510; 610; 710; 810) possédant un axe,
- une tige de piston (12), traversant de manière mobile dans la direction axiale au moins une extrémité du cylindre,
- un piston (18) relié à la tige de piston (12) à l'intérieur du cylindre (10; 410; 510; 610; 710; 810),
- une pluralité de chambres de fluide (30a,30b,28) avec une capacité variable les unes par rapport aux autres en fonction du déplacement de la tige de piston (12) par rapport au cylindre (10; 410; 510; 610; 710; 810) et des liaisons de fluide (20 entre 30a et 30b; 34,32,36 entre 30b et 28; 24 entre 30a et 28) entre au moins deux des chambres de fluide (30a,30b,28),
dans lequel l'une au moins des liaisons de fluide (20 entre 30a et 30b; 34,32,36 entre 30b et 28; 24 entre 30a et 28) comporte un ensemble de vannes (36; 436; 536; 636; 736; 836) entre deux tronçons partiels (432; 532; 632; 732; 832 et 432a; 532a; 632a; 732a; 832a) de cette liaison de fluide,
dans lequel en outre l'ensemble de vannes (36; 436; 536; 636; 736; 836) est réalisé avec au moins un siège de vanne (440b; 740b; 840b), auquel fait suite le premier tronçon (432; 532; 632; 732; 832),
dans lequel en outre un premier côté (442e) d'un élément de vanne de courant principal (442; 542; 642; 742; 842) peut être pressé élastiquement contre le siège de vanne (440b; 740b; 840b) dans une position d'application contre le siège de vanne,
dans lequel en outre un deuxième côté (442f) de l'élément de vanne de courant principal (442; 542; 642; 742; 842), éloigné du premier côté (442e) de l'élément de vanne de courant principal (442; 542; 642; 742; 842), adjacent à une chambre de commande (448; 548; 648; 748), peut être soumis à la pression de fluide (p₂) dans cette chambre de commande (448; 548; 648; 748),
dans lequel en outre est prévu un tronçon d'étranglement (442d; 542d; 642d; 742d; 842d) reliant la chambre de commande (448; 548; 648; 748) avec le premier tronçon partiel (432; 532; 632; 732; 832), qui présente une section constante,
dans lequel en outre la chambre de commande (448; 548; 648; 748) est en liaison avec le deuxième tronçon partiel (432a; 532a; 632a; 732a; 832a), par une évacuation de chambre de commande (446c; 546c; 652h; 746c; 846c),
dans lequel en outre à cette évacuation de chambre de commande (446c; 546c; 652h; 746c; 846c) est associé un dispositif de dimensionnement de la section d'évacuation (452; 552; 752; 852) et
dans lequel le dispositif de dimensionnement de la section d'évacuation (452; 552; 752; 852) est réglable dans une pluralité de positions, qui conditionnent chaque fois différentes sections d'évacuation de l'évacuation de la chambre de commande (446c; 546c; 652h; 746c; 846c),
**caractérisé en ce que** lors du déplacement relatif du cylindre (10; 410; 510; 610; 710; 810) et du piston (18), lorsque l'évacuation de la chambre de commande (446c; 546c; 652h; 746c; 846c) est fermée et lorsque l'élément de vanne de courant principal (442; 542; 642; 742; 842) se trouve dans la position d'application contre le siège de vanne, une force hydraulique exercée sur l'élément de vanne de courant principal (442; 542; 642; 742; 842), par la pression (p₁) régnant dans le premier tronçon partiel (432; 532; 632; 732; 832), est supérieure à une force hydraulique exercée sur l'élément de vanne de courant principal (442; 542; 642; 742; 842), par la pression (p₂) régnant dans la chambre de commande (448; 548; 648; 748),
de sorte que lorsque la section d'évacuation de chambre de commande diminue, lorsque les débits deviennent plus petits à travers l'évacuation de chambre de commande (446c; 564c; 642h; 746c; 846c) et lorsque les différences de pression (p₁-p₀) augmentent entre la pression (p₁) régnant dans le premier tronçon partiel (432; 532; 632; 732; 832) et la pression (po) régnant dans le deuxième tronçon partiel (432a; 532a; 632a; 732a; 832a), l'élément de vanne de courant principal (442; 542; 642; 742; 842) commence à se soulever du siège de vanne. (Figure 13)

2. Amortisseur d'oscillations comportant
- un cylindre (10; 210) possédant un axe,
- une tige de piston (12), traversant de manière mobile dans la direction axiale au moins une extrémité du cylindre,
- un piston (18) relié à la tige de piston (12) à l'intérieur du cylindre (10; 210),
- une pluralité de chambres de fluide (30a,30b,28) avec une capacité variable les unes par rapport aux autres en fonction du déplacement de la tige de piston (12) par rapport au cylindre (10; 210) et des liaisons de fluide (20 entre 30a et 30b; 34,32,36 entre 30b et 28; 24 entre 30a et 28) entre au moins deux des chambres de fluide (30a,30b,28),
dans lequel l'une au moins des liaisons de fluide (20 entre 30a et 30b; 34,32,36 entre 30b et 28; 24 entre 30a et 28) comporte un ensemble de vannes (36; 236) entre deux tronçons partiels (232; 232a) de cette liaison de fluide,
dans lequel en outre l'ensemble de vannes (36; 236) est réalisé avec au moins un siège de vanne, auquel fait suite le premier tronçon (232),
dans lequel en outre un premier côté (242e) d'un élément de vanne de courant principal (242) peut être pressé élastiquement contre le siège de vanne dans une position d'application contre le siège de vanne,
dans lequel en outre un deuxième côté (242f) de l'élément de vanne de courant principal (242), éloigné du premier côté (242e) de l'élément de vanne de courant principal (242), adjacent à une chambre de commande (248), peut être soumis à la pression de fluide (p₂) dans cette chambre de commande (248),
dans lequel en outre est prévu un tronçon d'étranglement (242d; 242d1) reliant la chambre de commande (248) avec le premier tronçon partiel (232),
dans lequel en outre la chambre de commande (248) est en liaison avec le deuxième tronçon partiel (232a), par une évacuation de chambre de commande (252h),
dans lequel en outre à cette évacuation de chambre de commande (252h) est associé un dispositif de dimensionnement de la section d'évacuation (252) et
dans lequel le dispositif de dimensionnement de la section d'évacuation (252) est réglable dans une pluralité de positions, qui conditionnent chaque fois différentes sections d'évacuation de l'évacuation de la chambre de commande (252h),
**caractérisé en ce que** lors du déplacement relatif du cylindre (10; 210) et du piston (18), lorsque l'évacuation de la chambre de commande (252h) est fermée et que l'élément de vanne de courant principal (242) se trouve dans la position d'application contre le siège de vanne, une force hydraulique, exercée sur l'élément de vanne de courant principal (242), par la pression (p₁) régnant dans le premier tronçon partiel (232), est sensiblement égale à une force hydraulique exercée sur l'élément de vanne de courant principal (242), par la pression (p₂) régnant dans la chambre de commande (248), et ce que la section du tronçon d'étranglement (242d; 242d1) augmente également lorsqu'augmente la section d'évacuation de la chambre de commande,
de sorte que lorsque la section d'évacuation de chambre de commande diminue, lorsque les débits deviennent plus petits à travers l'évacuation de chambre de commande (252h) et lorsque les différences de pression (p₁-p₀) augmentent entre la pression (p₁) régnant dans le premier tronçon partiel (232) et la pression (p₀) régnant dans le deuxième tronçon partiel (232a), l'élément de vanne de courant principal (242) commence à se soulever du siège de vanne. (Figure 13)

3. Amortisseur d'oscillations selon la revendication 2, **caractérisé en ce que** la section du tronçon d'étranglement (242d/242d1) augmente plus lentement que la section d'écoulement de la chambre de commande.

4. Amortisseur d'oscillations comportant
- un cylindre (10; 110) possédant un axe,
- une tige de piston (12), traversant de manière mobile dans la direction axiale au moins une extrémité du cylindre,
- un piston (18) relié à la tige de piston (12) à l'intérieur du cylindre (10; 110),
- une pluralité de chambres de fluide (30a,30b,28) avec une capacité variable les unes par rapport aux autres en fonction du déplacement de la tige de piston (12) par rapport au cylindre (10; 110) et des liaisons de fluide (20 entre 30a et 30b; 34,32,38,58,32a entre 30b et 28; 24 entre 30a et 28) entre au moins deux des chambres de fluide (30a,30b,28),
dans lequel l'une au moins des liaisons de fluide (20 entre 30a et 30b; 34,32,38,58,32a entre 30b et 28; 24 entre 30a et 28) comporte un ensemble de vannes (36; 136) entre deux tronçons partiels (32; 132 et 32a; 132a) de cette liaison de fluide,
dans lequel en outre l'ensemble de vannes (36; 136) est réalisé avec au moins un siège de vanne (40b; 140b), auquel fait suite le premier tronçon (32; 132),
dans lequel en outre un premier côté (42e; 142e) d'un élément de vanne de courant principal (42; 142) peut être pressé élastiquement contre le siège de vanne (40b; 140b) dans une position d'application contre le siège de vanne,
dans lequel en outre un deuxième côté (42f; 142f) de l'élément de vanne de courant principal (42; 142), éloigné du premier côté (42e; 142e) de l'élément de vanne de courant principal (42; 142), adjacent à une chambre de commande (48; 148), peut être soumis à la pression de fluide (p2) dans cette chambre de commande (48; 148),
dans lequel en outre est prévu un tronçon d'étranglement (42d; 142d) reliant la chambre de commande (48; 148) avec le premier tronçon partiel (32; 132),
dans lequel en outre la chambre de commande (48; 148) est en liaison avec le deuxième tronçon partiel (32a; 132a), par une évacuation de chambre de commande (46c; 152h),
dans lequel en outre à cette évacuation de chambre de commande (46c; 152h) est associé un dispositif de dimensionnement de la section d'évacuation (52; 152) et
dans lequel le dispositif de dimensionnement de la section d'évacuation (52; 152) est réglable dans une pluralité de positions, qui conditionnent chaque fois différentes sections d'évacuation de l'évacuation de la chambre de commande (46c; 252h), et
dans lequel il est prévu une soupape de surpression (60/46e; 152/142i) s'ouvrant de la chambre de commande (48; 148) vers le deuxième tronçon partiel (32a; 132a), dans le cas d'une différence de pression Δpₖ prédéterminée,
**caractérisé en ce que** lors du déplacement relatif du cylindre (10; 110) et du piston (18), lorsque l'évacuation de la chambre de commande (46c; 152h) est fermée et que l'élément de vanne de courant principal (42; 142) se trouve dans la position d'application contre le siège de vanne, une force hydraulique, exercée sur l'élément de vanne de courant principal (42; 142), par la pression (p₁) régnant dans le premier tronçon partiel (32; 132), est sensiblement égale à une force hydraulique exercée sur l'élément de vanne de courant principal (42; 142), par la pression (P2) régnant dans la chambre de commande (48; 148),
de sorte que l'élément de vanne de courant principal (42; 142) commence à se soulever du siège de vanne (40b; 140b), indépendamment de la section de l'évacuation de la chambre de commande (46; 152h), au-dessus d'une valeur limite de la section d'évacuation de la chambre de commande, toujours pour le même débit (Qₖ) à travers l'évacuation de la chambre de commande (46c; 152h), le soulèvement ayant lieu lorsque la section d'évacuation de la chambre de commande diminue, lorsqu'augmente la différence de pression (p₁-p₀) entre la pression (p₁) régnant dans le premier tronçon partiel (32; 132) et la pression (po) régnant dans le deuxième tronçon partiel (32a; 132a), et l'élément de vanne de courant principal (42; 142) commence à se soulever du siège de vanne de vanne (40b; 140b) au-dessous de la valeur limite de la section d'évacuation de la chambre de commande, lorsque la section d'évacuation de la chambre de commande continue de diminuer, indépendamment du débit (Q) à travers l'évacuation de la chambre de commande (46c; 152h), dans le cas d'une différence de pression Δpₖ prédéterminée, restant constante, entre la pression (p₁) régnant dans le premier tronçon partiel (32; 132) et la pression (p₀), régnant dans le deuxième tronçon partiel (32a; 132a). (Figure 11)

5. Amortisseur d'oscillations selon la revendication 4, **caractérisé en ce que** l'élément de vanne de courant principal (42; 142) présente dans la position d'application contre le siège de vanne, sur ses deux côtés (42e,42f; 142e,142f), des surfaces d'application (F₁,F₂) sensiblement égales pour la pression (p₁) régnant dans le premier tronçon partiel (32; 132) et pour la pression (p₂) régnant dans la chambre de commande (48; 148).

6. Amortisseur d'oscillations selon l'une des revendications 1 à 5, **caractérisé en ce que** l'ensemble de vannes (36) est placé sur le cylindre (10).

7. Amortisseur d'oscillations selon l'une des revendications 1 à 6, **caractérisé en ce que**, dans le cas d'un amortisseur d'oscillations à deux tubes avec deux chambres de fluide (30a,30b) séparées l'une de l'autre par le piston (18) et pouvant être reliées entre elles par une soupape de piston (20), ainsi qu'avec une chambre de compensation (28) pouvant être reliée par une soupape de fond (24), à une chambre de fluide (30a) proche du fond, la liaison de fluide (32a), contenant l'ensemble de vannes (36), s'étend depuis la chambre de fluide (30b) éloignée du fond vers la chambre de compensation (28).
